Europäisches Patentamt

(19) European Patent Office

Office européen des brevets

(11) Veröffentlichungsnummer: **0 053 267**
**B1**

(12) **EUROPÄISCHE PATENTSCHRIFT**

(45) Veröffentlichungstag der Patentschrift:
23.01.85

(21) Anmeldenummer: 81108590.1

(22) Anmeldetag: 20.10.81

(51) Int. Cl.⁴: **H 04 Q 11/04**

(54) Schaltungsanordnung für Zeitmultiplex-Fernmeldevermittlungsanlagen für Mehrkanalverbindungen.

(30) Priorität: 03.12.80 DE 3045606

(43) Veröffentlichungstag der Anmeldung:
09.06.82 Patentblatt 82/23

(45) Bekanntmachung des Hinweises auf die Patenterteilung:
23.01.85 Patentblatt 85/4

(84) Benannte Vertragsstaaten:
AT CH FR GB IT LI NL SE

(56) Entgegenhaltungen:
DE - B - 2 246 534

REVIEW OF THE ELECTRICAL COMMUNICATION
LABORATORIES, Band 27, Nr. 9/10, September/Oktober
1979 Seiten 758-772 Tokyo, JP. K. TAWARA et al. "A time
division switching network based on time switches"
NATIONAL TELECOMMUNICATIONS CONFERENCE
NTC 1980, 30. November - 4. Dezember 1980, Seiten
19.2.1 - 19.2.5, IEEE New York, U.S.A. K. GOTH et al.:
"Design concepts of a digital switching system for
higher performance"
INTERNATIONAL SWITCHING SYMPOSIUM, ISS 1976,
Oktober 1976, Seiten 411.1.1 - 411.1.8 Kyoto, JP. H.
FUKINUKI et al.: "Structure of time division switching
networks"

(73) Patentinhaber: Siemens Aktiengesellschaft, Berlin und
München Wittelsbacherplatz 2, D-8000 München 2 (DE)

(72) Erfinder: Troost, Marcel Abraham, Dipl.-Ing.,
Gabriele-Münter-Strasse 25, D-8000 München 71 (DE)

BUNDESDRUCKEREI BERLIN

## Beschreibung

Die Erfindung betrifft eine Schaltungsanordnung für Zeitmultiplex-Fernmeldevermittlungsanlagen, insbesondere für PCM-Fernsprechvermittlungsanlagen, mit einer Zeitmultiplexkoppelanordnung, über die im Vergleich zu je nur einen einzigen Zeitkanal beanspruchenden Verbindungen (Einkanalverbindungen) dem Zweck einer Erzielung einer größeren Bandbreite und/oder einer feineren Amplitudenstufung dienende und hierzu zwei oder mehrere Zeitkanäle beanspruchende Verbindungen (Mehrkanalverbindungen) herstellbar sind, und in der bei der Vermittlung von einer Mehrkanalverbindung angehörenden Zeitkanälen einer ankommenden Zeitmultiplexleitung zu entsprechenden Zeitkanälen einer abgehenden Zeitmultiplexleitung mittels eines zur Aufnahme der in einem Pulsrahmen maximal übertragbaren Teilinformationen geeigneten Vollspeichers die ursprüngliche zeitliche Reihenfolge der pro Pulsrahmen über die Zeitkanäle eintreffenden Teilinformationen bei deren Aussendung beibehalten wird, und in der der Schreibbetrieb, der einer Aufnahme der eintreffenden Teilinformationen einzeln pro ankommenden Zeitkanal an Speicherplätzen des Vollspeichers dient, zyklisch und der Lesebetrieb, der einer Weitergabe dieser Teilinformationen einzeln über die abgehenden Zeitkanäle dient, gemäß Vermittlungsdaten durchgeführt wird, die die Zuordnung der abgehenden Zeitkanäle zu den ankommenden Zeitkanälen angeben und pro abgehenden Zeitkanal auf Speicherplätzen eines Haltespeichers in Form von Speicherplatzadressen des Vollspeichers gespeichert sind, und in der außer dem genannten — ersten — Vollspeicher noch ein zweiter Vollspeicher vorgesehen ist, wobei der eine Vollspeicher während der Dauer eines ersten Schreibpulsrahmens und der andere Vollspeicher während der Dauer eines nächstfolgenden zweiten Schreibpulsrahmens im Schreibbetrieb ist, und in der die in den Speicherplätzen beider Vollspeicher gespeicherten Teilinformationen innerhalb des nächstfolgenden Pulsrahmens der ankommenden Zeitmultiplexleitung ausgelesen werden, um über abgehende Zeitkanäle zur Aussendung gebracht zu werden.

Eine Schaltungsanordnung dieser Art ist bereits durch eine Systembeschreibung vom »International Switching Symposium« ISS 76 Seiten 411-1-1 ff. (»STRUCTURE OF TIME DIVISION SWITCHING NETWORKS«) bekannt. Darüber hinaus ist eine Schaltungsanordnung der angegebenen Art teilweise bereits durch die deutsche Auslegeschrift 2 246 534 bekannt. Durch diese sind außerdem auch die Zusammenhänge und Einzelheiten der Gründe für eine Herstellung von Mehrkanalverbindungen bekannt.

Schaltungsanordnungen der bekannten Art machen wegen der Verwendung eines Vollspeichers bei der Herstellung außer von Einkanalverbindungen auch von Mehrkanalverbindungen für die vermittlungstechnische Zuordnung freier abgehender Zeitkanäle zu ankommend belegten Zeitkanälen einer aufzubauenden Mehrkanalverbindung relativ komplizierte Auswahlvorgänge erforderlich. Auch geht man bei bekannten Anordnungen davon aus, daß die Pulsrahmengrenzen der Schreibpulsrahmen, Lesepulsrahmen und der Pulsrahmen der ankommenden sowie abgehenden Zeitmultiplexleitungen seitlich übereinstimmen. Bei einer mehrstufigen Koppelanordnung mit mehreren Zeitlagenvielfach-Koppelstufen erfahren die über die Zeitkanäle übertragenen Teilinformationen jedoch eine Verzögerung, die durch die Schreibvorgänge und Lesevorgänge und die dabei stattfindenden Serien-Parallel-Umsetzungen und Parall-Serien-Umsetzungen bedingt sind, und die sich von Koppelstufe (Zeitlagenvielfach) zu Koppelstufe aufsummiert. Deshalb ist in bekannten Zeitmultiplexkoppelanordnungen vorgesehen worden, die Zeitlagenvielfache der verschiedenen Koppelstufen in der Weise unterschiedlich zu steuern, daß die Schreib- und Lesepulsrahmen von Koppelstufe zu Koppelstufe nicht deckungsgleich sind hinsichtlich der Pulsrahmengrenzen, sondern daß die Pulsrahmengrenzen zueinander versetzt sind, damit die Schreib- und Lesepulsrahmengrenzen den Pulsrahmengrenzen der Pulsrahmen der Zeitmultiplexleitungen zeitlich angepaßt sind; wie aus den obigen Ausführungen hervorgeht, sind ja die Pulsrahmen der Zeitmultiplexleitungen, die zwischen den verschiedenen Koppelstufen verlaufen, je nach den beiden Koppelstufen, zwischen denen sie jeweils verlaufen, hinsichtlich der Pulsrahmengrenzen zeitlich nicht deckungsgleich. Dadurch, daß in bekannten Zeitmultiplexvermittlungsleitungen die Zeitvielfache der verschiedenen Koppelstufen so gesteuert werden, daß die Pulsrahmen hinsichtlich der Pulsrahmengrenzen zeitlich den Pulsrahmengrenzen der Pulsrahmen der ankommenden Zeitmultiplexleitungen jeweils angepaßt sind, werden im bekannten Falle Reihenfolgeprobleme für die aufeinanderfolgenden Teilinformationen einer Mehrkanalverbindung umgangen. Eine durch die erwähnte zeitliche Anpassung bedingte, nicht für alle Zeitlagenvielfach-Koppelstufen hinsichtlich der Pulsrahmengrenzen zeitgleiche Steuerung hat jedoch zur Folge, daß die Steuerungsvorgänge insgesamt hinsichtlich des Arbeitsaufwandes und hinsichtlich der der Steuerung dienenden Schaltmittel aufwendiger werden.

Für die Erfindung besteht die Aufgabe, die Steuerungsvorgänge der Zeitlagenvielfache in einer mehrstufigen Zeitmultiplexkoppelanordnung durch Vereinheitlichung möglichst zu vereinfachen und gegenüber der bekannten Anordnung die Lösung der bei Mehrkanalverbindungen bestehenden Reihenfolgeprobleme auf steuerungstechnisch und vermittlungstechnisch einfachere Weise zu lösen.

Diese Aufgabe wird erfindungsgemäß dadurch gelöst, daß die Pulsrahmen der Zeitkanäle einer ankommenden Zeitmultiplexleitung gegenüber den Schreibpulsrahmen in nacheilendem Sinne um ein ganzzahliges Vielfaches der Dauer eines einem Zeitkanal entsprechenden Zeitschlitzes zeitlich versetzt sind, wodurch gemäß dieser Versetzung die innerhalb eines Pulsrahmens eintreffenden Teilinformationen teils in einer zweiten Reihe von letzten Speicherplätzen des einen Vollspeichers und teils in einer ersten Reihe von ersten Speicherplätzen des anderen Vollspeichers gespeichert werden und daß Verknüpfungsschaltmittel vorgesehen sind, mit deren Hilfe aus der im Haltespeicher für jeden der abgehenden Zeitkanäle unter den ihnen entsprechenden Haltespeicher-Speicherplatzadressen zu speichernden oder gespeicherten Vollspeicher-Speicherplatzadresse in Zusammenhang mit der betreffenden Haltespeicher-Speicherplatzadresse ableitbar ist, in welchem der beiden Vollspeicher die unter dieser Vollspeicher-Speicherplatzadresse gespeicherte Teilinformation zu lesen ist.

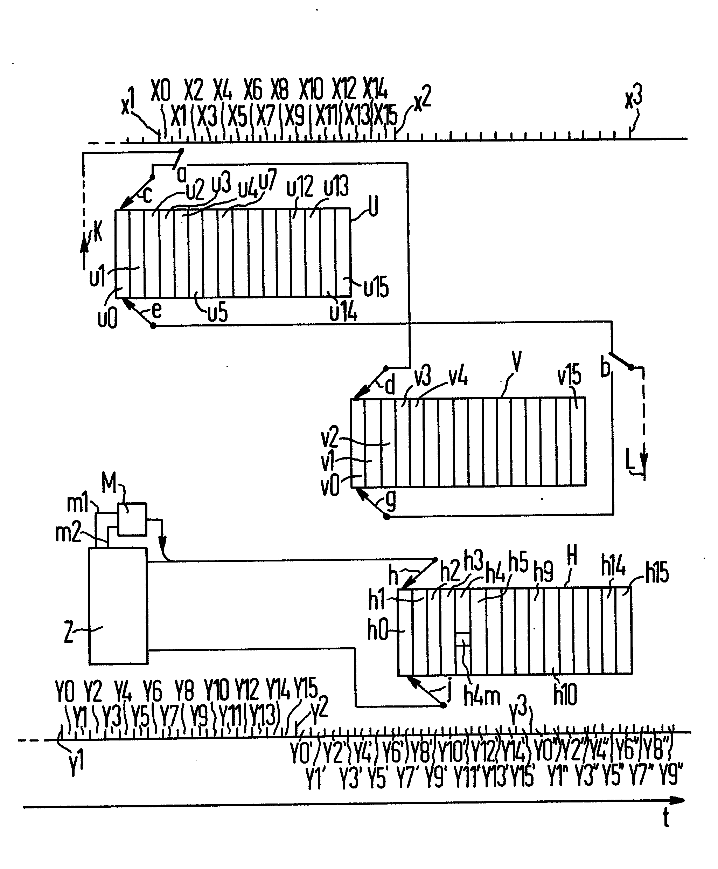

In der Zeichnung ist ein Ausführungsbeispiel der Erfindung nur in wesentlich zu ihrem Verständnis beitragenden Bestandteilen dargestellt.

Die in der Zeichnung dargestellte Anordnung zeigt u. a. zwei Vollspeicher U und V, einen Haltespeicher H und eine Steuereinrichtung Z eines Zeitlagenvielfaches, sowie eine ankommende Zeitmultiplexleitung K und eine abgehende Zeitmultiplexleitung L. Im untersten Teil dieser Zeichnung ist ein Zeitmaßstab t wiedergegeben. Unmittelbar darüber sind zwei Pulsrahmen angedeutet, die die Aussendung von Teilinformationen über die Zeitmultiplexleitung L betreffen, deren Pulsrahmengrenzen mit y1, y2 und y3 bezeichnet sind, und die Zeitschlitze Y0 bis Y15 und Y0′ bis Y15′ sowie Y0″ bis Y9″ umfassen, also Zeitintervalle, in denen pro Pulsrahmen, z. B. y1 bis y2, 16 Teilinformationen einzeln über 16 abgehende Zeitkanäle — das sind also die Zeitkanäle der Zeitmultiplexleitung L — übertragbar sind. Im obersten Teil der Zeichnung ist ebenfalls ein Pulsrahmen angedeutet, der den Empfang von Teilinformationen über die Zeitmultiplexleitung K betrifft, dessen Pulsrahmengrenzen mit x1 und x2 bezeichnet sind, und der Zeitschlitze X0 bis X15 umfaßt, also Zeitintervalle, in denen 16 Teilinformationen einzeln über 16 Zeitkanäle — das sind also die Zeitkanäle der Zeitmultiplexleitung K — übertragbar sind.

Die beschriebene Anordnung ist für eine Verwendung in Zeitmultiplex-Fernmeldevermittlungsanlagen vorgesehen. Diese können fernsprechtechnischen und fernschreibtechnischen Zwecken, aber auch Zwecken anderweitiger Datenübertragung und Zwecken jeglicher anderer Art dienen. Bei der verwendeten Zeitmultiplextechnik kann es sich um jede ihrer besonderen Arten, wie z. B. mit Pulsamplitudenmodulation oder mit Pulscodemodulation handeln. Zeitmultiplex-Fernmeldevermittlungsanlagen weisen jeweils eine Zeitmultiplex-Koppelanordnung auf, die in der Regel mehrstufig aufgebaut ist. Ähnlich wie bei reinen Raumkoppelvielfach-Koppelanordnungen konventioneller Art (z. B. aus bistabilen polarisierten Koppelrelais aufgebaute Relaiskoppelfelder), die in der Regel mehrere, z. B. zwei, drei, vier, fünf oder sechs Koppelstufen aufweisen können, sind auch Zeitmultiplex-Koppelanordnungen mehrstufig aufgebaut, wobei in jeder der Stufen entweder Zeitlagenvielfaches, Raumlagenvielfache oder Raum-Zeitlagenvielfaches vorgesehen sein können. In diesen Stufen Vielfache mehr als einer dieser Arten vorzusehen, ist dabei nicht ausgeschlossen.

Bekanntlich gewährt ein Zeitkanal, über den eine Verbindung durchgeschaltet wird, dieser Verbindung eine bestimmte Bandbreite und eine bestimmte Amplitudenstufung. Diese ergeben sich aus der Abtastfrequenz und der Anzahl von bit pro Teilinformation, die pro Abtastvorgang gewonnen wird. In diesem Zusammenhang sei auf die Nachrichtentechnische Zeitschrift 1967, Heft 11, Seite 667 ff, ferner auf die Siemens-Zeitschrift 45 (1971), Beiheft »Nachrichten-Übertragungstechnik« Seiten 186 bis 194, sowie auf die Zeitschrift »Der Fernmelde-Ingenieur«, 32. Jahrgang, Heft 11 hingewiesen. Im Vergleich zu Einkanalverbindungen der zuvor angesprochenen Art gibt es Mehrkanalverbindungen, die zum Zweck einer Erzielung einer größeren Bandbreite und/oder einer feineren Amplitudenstufung hergestellt werden und jeweils eine Mehrzahl von einzeln parallel durchgeschalteten Kanälen umfassen. Mehrkanalverbindungen können z. B. zur Übertragung von Rundfunkprogrammen, Fernsehprogrammen, für Datenübertragung, für Fernsehtelefonverbindungen und dergleichen erforderlich sein. Wie im weiteren noch ausführlicher erläutert werden soll, dient die dargestellte und beschriebene Anordnung für eine Zeitmultiplex-Fernmeldevermittlungsanlage der Herstellung von Mehrkanalverbindungen sowie von Einkanalverbindungen. Wie bereits in der oben erwähnten DE-AS 2 246 534 dargelegt ist, wird ebenso wie in diesem bekannten Falle bei der Vermittlung von einer Mehrkanalverbindung angehörenden Zeitkanälen einer ankommenden Zeitmultiplexleitung zu entsprechenden Zeitkanälen einer abgehenden Zeitmultiplexleitung mittels eines zur Aufnahme der in einem Pulsrahmen maximal übertragbaren Teilinformationen geeigneten Vollspeichers die ursprüngliche zeitliche Reihenfolge der pro Pulsrahmen über die Zeitkanäle eintreffenden Teilinformationen bei deren Aussendung beibehalten. Im erfindungsgemäßen Falle werden aber im Gegensatz zum bekannten Falle zwei Vollspeicher U und V statt eines Vollspeichers verwendet.

Weiter oben wurde der in der Zeichnung dargestellte Zeitmaßstab t erwähnt, sowie die Pulsrahmen mit den Pulsrahmengrenzen x1 und x2, sowie y1, y2 und y3. Über die Zeitkanäle der ankommenden Zeitmultiplexleitung K in den 16 Zeitlagen X0 bis X15 eintreffende 16 Teilinformationen werden einzeln an den Speicherplätzen u0 bis u15 und v0 bis v15 der beiden Vollspeicher U und V eingeschrieben, d. h. gespeichert. Der Schreibbetrieb wird zyklisch abgewickelt. Jede der Teilinformationen wird also jeweils an einen Speicherplatz eingeschrieben. In der Reihenfolge ihres Eintreffens werden diese Teilinformationen gemäß der Folge ihrer Zeitlagen nacheinander an den Speicherplätzen u0, u1, u2, u3, ..., u15, v0, v1, v2, ... v15, u0, u1 usw. eingeschrieben. Hierzu ist in an sich bekannter Weise eine Ansteuerschreibeinrichtung c bzw. d pro Vollspeicher vorgesehen. Es kann auch für beide Vollspeicher eine gemeinsame Ansteuerschreibeinrichtung vorgesehen sein. Die Ansteuerschreibeinrichtung c wird also sukzessive weitergeschaltet. Die Weiterschaltvorgänge finden sukzessive immer nach der Dauer eines einem Zeitkanal entsprechenden Zeitschlitzes statt. Jeder der Zeitlagen der Teilinformationen entspricht immer eine bestimmte Stellung der Ansteuerschreibeinrichtung c. Entsprechendes gilt für die Ansteuerschreibeinrichtung d des Vollspeichers V.

Die beiden Vollspeicher sind abwechselnd im Schreibbetrieb. Während der eine Vollspeicher im Schreibbetrieb ist, wird seine Ansteuerschreibeinrichtung in der angegebenen Weise sukzessive weitergeschaltet; die Ansteuerschreibeinrichtung des anderen Vollspeichers kann während dessen in Ruhestellung sein. Es würde aber auch nicht stören, wenn immer beide Ansteuerschreibeinrichtungen zugleich und synchron sukzessive weitergeschaltet werden und lediglich mit Hilfe des Umschalters a bewerkstelligt wird, daß immer nur eine der beiden Ansteuerschreibeinrichtungen wirksam ist.

Welcher der beiden Vollspeicher jeweils im Schreibbetrieb ist, und welcher nicht, ist durch die augenblickliche Stellung des als Relaiskontakt dargestellten Umschalters a angegeben, der aber vorzugsweise in an sich bekannter Weise mit elektronsich arbeitenden Mitteln realisiert ist. Der Umschalter a verharrt also immer während der Dauer eines ganzen Schreibzyklusses eines der Vollspeicher in seiner jeweiligen Schaltstellung und wechselt diese immer nach Ablauf eines solchen Schreibzyklusses und vor Beginn des Schreibzyklusses des jeweils anderen Vollspeichers. In der Zeichnung ist der Umschalter a so dargestellt, daß gemäß der dargestellten Schaltsituation der Vollspeicher U zur Zeit im Schreibbetrieb ist und dessen Schreibzyklus gerade begonnen hat (die Ansteuerschreibeinrichtung c ist gerade auf den Speicherplatz u0 eingestellt).

Sind die beiden Vollspeicher U und V mit einer gemeinsamen Ansteuerschreibeinrichtung ausgestattet, so erreicht diese nacheinander die Speicherplätze u0 bis u15 und v0 bis v15 beider Vollspeicher U und V. In diesem Falle würde die augenblickliche Schaltstellung dieser gemeinsamen Ansteuerschreibeinrichtung in sinnfälliger Weise angeben, welcher von den beiden Vollspeichern jeweils im Schreibbetrieb ist und welcher nicht.

Ein Schreibzyklus eines der Vollspeicher erstreckt sich über die Dauer von so vielen aufeinanderfolgenden Zeitlagen, wie Teilinformationen innerhalb der Dauer eines Pulsrahmens eintreffen können. Die Dauer eines Schreibzyklusses immer eines der Vollspeicher entspricht einem Pulsrahmen. Deshalb wird dem Begriff Schreibzyklus der Begriff Schreibpulsrahmen zugeordnet. Ein solcher Zyklus läuft immer innerhalb eines solchen Rahmens ab. Folglich ist immer der eine der beiden Vollspeicher während der Dauer eines ersten Schreibpulsrahmens und der andere während der Dauer eines nächstfolgenden zweiten Schreibpulsrahmens im Schreibbetrieb, danach wieder der erste Vollspeicher usw.

Wie nun der Zeichnung weiterhin zu entnehmen ist, sind die Pulsrahmen der Zeitkanäle der ankommenden Zeitmultiplexleitung K gegenüber den Schreibpulsrahmen im nacheilenden Sinne um ein ganzzahliges Vielfaches der Dauer eines einem Zeitkanal entsprechenden Zeitschlitzes zeitlich versetzt. Im vorliegenden Beschreibungsbeispiel beträgt diese Versetzung das dreifache der Dauer eines einem Zeitkanal entsprechenden Zeitschlitzes. Zum Beispiel in der Zeitlage X0 ist die Ansteuerschreibeinrichtung c bereits auf den Speicherplatz u3 eingestellt. Hat sie den Speicherplatz u4 erreicht, so trifft erst die Teilinformationen mit der Zeitlage X1 über die Zeitmultiplexleitung K ein. Diese Versetzung im Sinne einer Nacheilung der Pulsrahmen der Zeitkanäle der ankommenden Zeitmultiplexleitung K gegenüber den Schreibpulsrahmen der Vollspeicher U und V beträgt also das dreifache der Dauer eines einem Zeitkanal entsprechenden Zeitschlitzes. Dadurch werden gemäß einer Versetzung die innerhalb eines Pulsrahmens eintreffenden Teilinformationen teils in einer zweiten Reihe von letzten Speicherplätzen u3 bis u15 des einen Vollspeichers U und teils in einer ersten Reihe von ersten Speicherplätzen v1 bis v3 des anderen Vollspeichers V gespeichert.

Die zuvor angegebenen zeitlichen Relationen zwischen den Pulsrahmen der über die Zeitkanäle der ankommenden Zeitmultiplexleitung eintreffenden Teilinformationen einerseits und den Schreibpulsrahmen der Vollspeicher sind in der Zeichnung dadurch zum Ausdruck gebracht, daß außer für die Pulsrahmen der ankommenden Zeitmultiplexleitung K und der abgehenden Zeitmultiplexleitung L auch für die Vollspeicher und ihre Speicherplätze sowie für die Schaltstellungen der beiden Ansteuerschreibeinrichtungen der gemeinsame Zeitmaßstab t gilt. Von diesem also leitet sich her, welche der Zeitlagen X0 bis X15, Y0 bis Y15, Y0' bis Y15' und Y0" bis Y9" im Betriebsablauf jeweils erreicht wird, und welche der Schaltstellungen die Ansteuerschreibeinrichtungen c und d bei der jeweils gegebenen Zeitlage einnehmen. Entsprechendes gilt für Ansteuerleseeinrichtungen e und g der beiden Vollspeicher und für eine Ansteuerschreibeinrichtung h und eine Ansteuerleseeinrichtung j eines Haltespeichers. Dies wird jedoch weiter unten noch mehr im einzelnen erläutert.

Der zuvor erwähnte Haltespeicher H dient zur Speicherung von Vermittlungsdaten, die die Zuordnung abgehender Zeitkanäle zu ankommenden Zeitkanälen innerhalb des beschriebenen Zeitlagenvielfaches angeben. Diese Zuordnung entspricht den Durchschaltedaten für jeweils eine Verbindung in einem Raumkoppelvielfach konventioneller Art (Eingangskoordinatenleitungsnummer/Ausgangskoordinatenleitungsnummer).

Diese Vermittlungsdaten werden bekanntlich mit Hilfe einer Wegesucheinrichtung jeweils für eine Verbindung anhand von in einem Belegungsspeicher (in Anlagen älterer Bauart: Wegesuchnetzwerk) gespeicherten Daten über den Zustand (frei oder belegt) aller maßgeblichen Teile des Koppelfeldes, hauptsächlich der Zwischenleitungen, durch informationsverarbeitende Verknüpfungsvorgänge ermittelt. Diese Vermittlungsdaten geben eindeutig den Verlauf einer über das mehrstufige Koppelfeld durchzuschaltenden und durchgeschalteten Verbindung hinsichtlich der dabei in Anspruch genommenen Zwischenleitungen und Koppelpunkte bzw. Zeitmultiplexleitungen, Zeitkanäle, Zeitlagen usw. an. Auch im vorliegenden Falle finden solche Wegesuchvorgänge für jede duchzuschaltende Verbindung statt. Handelt es sich dabei anstatt um eine Einkanalverbindung um eine Mehrkanalverbindung, so können mehrere solcher Wegesuchvorgänge einzeln für die dabei erforderlichen mehreren Verbindungsherstellungsvorgänge durchgeführt werden.

Wie angegeben, werden die mittels Wegesuchvorgängen ermittelten Vermittlungsdaten — soweit sie eine über das betreffende Zeitlagenvielfach führende Verbindung betreffen — in dem Haltespeicher dieses Zeitlagenvielfaches speichert. Den Kanalnummern der abgehenden Zeitkanäle sind die Speicherplätze des Haltespeichers bleibend zugeordnet. Wie bereits ausgeführt wurde, werden die über die ankommenden Zeitkanäle pro Pulsrahmen eintreffenden verbindungsindividuellen Teilinformationen zyklisch in die Vollspeicher eingeschrieben. Im Gegensatz hierzu erfolgt der Lesebetrieb, der einer Weitergabe dieser Teilinformationen einzeln über die abgehenden Zeitkanäle dient, gemäß den Vermittlungsdaten, die die Zuordnung der abgehenden Zeitkanäle zu den ankommenden Zeitkanälen angeben und pro abgehenden Zeitkanal auf Speicherplätzen des Haltespeichers in Form von Speicherplatzadressen der Vollspeicher gespeichert sind. Im Haltespeicher ist also pro abgehenden Zeitkanal auf einem jeweils diesem bleibend zugeordneten Speicherplatz angegeben, unter welcher Vollspeicher-Speicherplatzadresse die über diesen Zeitkanal weiterzugebende Teilinformation eingeschrieben, d. h. zwischengespeichert ist.

Den Zeitkanälen einer abgehenden Zeitmultiplexleitung sind — wie erläutert — die Speicherplätze des Haltespeichers bleibend zugeordnet. Zwecks Weitergabe der zwischengespeicherten Teilinformationen aus dem Vollspeicher werden folglich die Speicherplätze des Haltespeichers gemäß den Zeitlagen der abgehenden Zeitkanäle zyklisch angesteuert. Die erwähnte feste Zuordnung kann nun so getroffen sein, daß die Pulsrahmen der zu einer abgehenden Zeitmultiplexleitung gehörenden Zeitkanäle mit dem Lesezyklus des Haltespeichers deckungsgleich sind, d. h. daß die Pulsrahmengrenzen zeitlich mit dem Übergang der Lesevorgänge im Haltespeicher von der Zeitlage Y15 auf die Zeitlage Y0 bzw. von der Zeitlage Y15' auf die Zeitlage Y0' übereinstimmen. So aber ist es in der Zeichnung nicht dargestellt. Sondern im Beschreibungsbeispiel wird davon ausgegangen, daß die Pulsrahmengrenzen der Pulsrahmen der abgehenden Zeitkanäle gegenüber dem Beginn und dem Ende der Schreibzyklen der Vollspeicher zeitlich nicht deckungsgleich sind, sondern in einem Verzug um ein ganzzahliges Mehrfaches der Dauer eines einem Zeitkanal entsprechenden Zeitschlitzes. dies ist also ähnlich wie bei der bereits angesprochenen Versetzung zwischen den Pulsrahmen der Zeitkanäle einer ankommenden Zeitmultiplexleitung einerseits gegenüber den Schreibpulsrahmen der Vollspeicher andererseits.

Die erwähnte Versetzung und der erwähnte Verzug gehen von Gegebenheiten in der Zeitmultiplexleitung (ankommend bzw. abgehend) aus. Die Zeitlagenvielfache in den verschiedenen Vermittlungsschaltstufen werden hinsichtlich der Pulsrahmengrenzen der Schreibpulsrahmen und der Lesepulsrahmen der Vollspeicher dieser Zeitlagenvielfache zeitgleich gesteuert. Die Pulsrahmengrenzen der zu Zeitmultiplexleitungen gehörenden Pulsrahmen können bei der — wie zuvor angegeben — zeitgleichen Steuerung nicht deckungsgleich bleiben mit den Pulsrahmengrenzen der Schreibpulsrahmen und der Lesepulsrahmen. Wie bereits eingangs angedeutet, erfahren die Teilinformationen eines ganzen Pulsrahmens bei den Schreibvorgängen und bei den Lesevorgängen durch die dabei stattfinden den Serien-Parallelumsetzungen und Parallel-Serienumsetzungen zwangsläufig Verzögerungen, z. B. jeweils um den Zeitraum eines einem Zeitkanal entsprechenden Zeitschlitzes. Dadurch wird also jeweils der gesamte Pulsrahmen verzögert und seine beiden Pulsrahmengrenzen erfahren die zeitliche Versetzung in der erwähnten Weise.

Wie erläutert, werden die Vermittlungsdaten in den Haltespeicher H eingeschrieben. Dies wird mit Hilfe der Steuereinrichtung Z bewerkstelligt. Sie empfängt auf im einzelnen hier nicht beschriebene Weise die Vermittlungsdaten für eine im Aufbau befindliche Verbindung. Diese Vermittlungsdaten geben jeweils für eine Verbindung die Zuordnung in einem Zeitlagenvielfach zwischen einem abgehenden und einem ankommenden Zeitkanal an. Dem abgehenden Zeitkanal entspricht ein ganz bestimmter Speicherplatz im Haltespeicher H. Dem ankommenden Zeitkanal entspricht ein ganz bestimmter Speicherplatz in jedem der beiden Vollspeicher. Mit Hilfe von dem abgehenden Zeitkanal entsprechenden Daten steuert die Steuereinrichtung Z die Ansteuerschreibeinrichtung h auf den betreffenden Haltespeicher-Speicherplatz und bewirkt dort anschließend die Einspeicherung der dem betreffenden ankommenden Zeitkanal entsprechenden Vollspeicher-Speicherplatzadresse.

Im Zusammenhang damit, daß die zu einer Mehrkanalverbindung gehörenden und innerhalb eines Pulsrahmens der ankommenden Zeitmultiplexleitung über diese in bestimmter Reihenfolge in den verschiedenen Zeitlagen eintreffenden Teilinformationen nach Zwischenspeicherung in den Vollspeichern wieder in der gleichen Reihenfolge weitergegeben werden müssen, ist vorgesehen, daß die in Speicherplätzen beider Vollspeicher gespeicherten Teilinformationen genau innerhalb des nächstfolgenden Pulsrahmens der ankommenden Zeitmultiplexleitung ausgelesen werden, um über abgehende Zeitkanäle zur Aussendung gebracht zu werden. Die innerhalb des durch die Pulsrahmengrenzen x1 und x2 definierten Pulsrahmens über die Zeitkanäle der Zeitmultiplexleitung K in den Zeitlagen X0 bis X15 eintreffenden Teilinformationen, die entsprechend der Darstellung in der Zeichnung (welche — wie beschrieben — auch die Relationen zwischen Zeitlagen der Zeitkanäle einerseits und Speicherplätzen der Vollspeicher und des Haltespeichers andererseits andeutet) an den Speicherplätzen u3 bis u15 (Zeitlagen X0 bis X12) des Vollspeichers U und (nach Betätigung des Umschalters a nach Zeitlage X12) an den Speicherplätzen v0 bis v2 (Zeitlagen X13 bis X15) des Vollspeichers V gespeichert werden, werden also während eines Pulsrahmens wieder zur Aussendung gebracht, dessen Anfang durch die Pulsrahmengrenzen x2 gekennzeichnet ist, und innerhalb dessen die erste Zeitlage sendeseitig mit Y7' bezeichnet ist.

Wie bereits ausgeführt wurde, erfolgt das Einschreiben der über die Zeitmultiplexleitung K pro Zeitkanal eintreffenden Teilinformationen zyklisch. In der Reihenfolge ihrer Zeitlagen werden sie also sukzessive nacheinander an den Speicherplätzen der Vollspeicher U und V eingeschrieben. Das Auslesen dieser Teilinformationen erfolgt dagegen bezüglich der Reihenfolge der Speicherplätze der Vollspeicher U und V azyklisch; es erfolgt gemäß den im Haltespeicher H gespeicherten Vermittlungsdaten. Die Haltespeicherplätze sind den Zeitkanälen der abgehenden Zeitmultiplexleitung L einzeln zugeordnet. Demgemäß werden die Haltespeicherplätze h0 bis h15 über die Ansteuerleseeinrichtung j sukzessive nacheinander angesteuert, und es werden die in ihnen gespeicherten Vollspeicher-Speicherplatzadressen einzeln aus jedem einzelnen der Haltespeicherplätze ausgelesen. Haltespeicher-Speicherplatzadresse plus an dem betreffenden Haltespeicher gespeicherte Vollspeicher-Speicherplatzadresse stellen jeweils pro Verbindung die sie und die jeweilige Zeitstufe betreffenden Vermittlungsdaten dar.

Wird mittels Steuereinrichtung Z und von dieser gesteuerter Ansteuerleseeinrichtung j einer der Haltespeicherplätze angesteuert und die hier gespeicherte Vollspeicher-Speicherplatzadresse ausgelesen, so steuert die Steuereinrichtung mit dieser eine der Ansteuerleseeinrichtungen e und g (oder beide!) auf den betreffenden Vollspeicherplatz. Nun kann die hier gespeicherte Teilinformation ausgelesen und in derjenigen Zeitlage auf die abgehende Zeitmultiplexleitung L ausgesendet werden, der zeitlich der zuvor angesteuerte Haltespeicherplatz zugeordnet ist. Hinsichtlich des Auslesens der Teilinformation ist in erfindungsgemäßem Zusammenhang noch die Frage zu erläutern, aus welchem der beiden Vollspeicher die unter der aus dem Haltespeicher entnommenen Vollspeicher-Speicherplatzadresse auszusendende Teilinformation nun wirklich auszulesen ist. Diese Alternative besteht bei jedem abgehenden Zeitkanal erneut.

Zur Erläuterung dieser zuvor angesprochenen Frage ist zunächst ganz allgemein festzustellen, daß aus der im Haltespeicher für jeden der abgehenden Zeitkanäle unter den ihnen entsprechenden Haltespeicher-Speicherplatzadressen zu speichernden (oder gespeicherten) Vollspeicher-Speicherplatzadresse im Zusammenhang mit der betreffenden Haltespeicher-Speicherplatzadresse ableitbar ist, in welchem der beiden Vollspeicher die unter dieser Vollspeicher-Speicherplatzadresse gespeicherte Teilinformation zu lesen ist. Der Zusammenhang einer Haltespeicher-Speicherplatzadresse mit einer an dem betreffenden Haltespeicherplatz gespeicherten Vollspeicher-Speicherplatzadresse gibt die Vermittlungsdaten für die betreffende Verbindung bezüglich des jeweiligen Zeitlagenvielfaches wieder.

Sind im Zuge einer Verbindungsherstellung mittels Wegesuche die Vermittlungsdaten bezüglich eines Zeitlagenvielfaches ermittelt und der betreffenden Steuereinrichtung Z übergeben, so nimmt sie nicht nur die beschriebene Einspeicherung (Einschreiben) an dem dem jeweiligen abgehenden Zeitkanal entsprechenden Haltespeicherplatz vor, sondern bildet mit Hilfe von Verknüpfungsschaltmitteln M, denen über den Informationsweg m1 die betreffende Haltespeicher-Speicherplatzadresse und über den Informationsweg m2 die betreffende Vollspeicher-Speicherplatzadresse zugeführt wird, eine Zusatzinformation, die an dem betreffenden Haltespeicherplatz zusammen mit der Vollspeicher-Speicherplatzadresse gespeichert wird. Hierzu dient ein besonderer Teil jedes Haltespeicherplatzes, der beim Haltespeicherplatz h4 angedeutet und mit h4m bezeichnet ist. Diese Zusatzinformation gibt also jeweils Auskunft darüber, aus welchem der beiden Vollspeicher eine über einen abgehenden Zeitkanal jeweils auszusendende Teilinformation auszulesen ist wenn der betreffende Vollspeicherplatz mit Hilfe der aus dem Haltespeicher ausgelesenen Vollspeicher-Speicherplatzadresse angesteuert wird. Welchen Inhalt und welche Auswirkungen diese Zusatzinformation hat, soll anschließend erläutert werden.

Wie angegeben, gelten für die Zuordnung abgehender Zeitkanäle zu ankommenden Zeitkanälen Grenzen, die durch die Pulsrahmengrenzen x1, x2, x3 usw. der Pulsrahmen der ankommenden Zeitkanäle festgelegt sind. Den Zeitlagen X0 bis X15, also Zeitlagen eines Pulsrahmens, können abgehende Zeitkanäle in der Weise vermittlungstechnisch zugeordnet werden, daß den Zeitlagen X0 bis X15 ankommender Zeitkanäle Zeitlagen abgehender Zeitkanäle innerhalb des jeweils nächstfolgenden Pulsrahmens ankommender Zeitkanäle zum Aussenden der betreffenden Teilinformation zugeordnet werden, also Zeitkanäle z. B. mit den Zeitlagen Y7' bis Y6''.

Hierzu ist nun weiterhin vorgesehen, daß ebenso wie jeder der Pulsrahmen (z. B. x1/x2) der ankommenden Zeitkanäle (z, B. mit den Zeitlagen X0 bis X15) durch die ihm gegenüber vorgegebene Versetzung der Schreibpulsrahmen (z. B. voreilend um drei Zeitlagen) in einen hinsichtlich Zeitlagen ersten Teilrahmen (z. B. X0 bis X12) von Zeitkanälen, denen die zweite Reihe von Speicherplätzen (z. B. u3 bis u15) in dem einen Vollspeicher (z. B. U) zugeordnet ist, und in einem hinsichtlich Zeitlagen folgenden zweiten Teilrahmen (z. B. X13 bis X15) von Zeitkanälen, denen die erste Reihe von Speicherplätzen (z. B. v0 bis v2) in dem anderen Vollspeicher (z. B. V) zugeordnet ist, unterteilt ist, auch die abgehenden Zeitkanäle, die mit ihren Zeitlagen (z. B. Y7' bis Y6'') innerhalb eines jeweils nächstfolgenden Pulsrahmens der ankommenden Zeitkanäle liegen, in entsprechender Weise in einen hinsichtlich Zeitlagen ersten Teilrahmen (z. B. Y7' bis Y3'') und einen hinsichtlich Zeitlagen folgenden zweiten Teilrahmen (Y4'' bis Y5'') zusammengefaßt sind. Ferner ist vorgesehen, daß bei der vermittlungstechnischen Zuordnung von abgehenden Zeitkanälen des ersten — bzw. zweiten — Teilrahmens (z. B. Y7' bis Y3'' bzw. Y4'' bis Y6''), deren einzelnen Zeitlagen die Speicherplatzadressen der Speicherplätze (z. B. h0 bis h12 bzw. h13 bis h15) des Haltespeichers H entsprechen, zu ankommenden Zeitkanälen des ersten — bzw. zweiten — Teilrahmens (z. B. X0 bis X12 bzw. X13 bis X15), deren einzelnen Zeitlagen die in den Speicherplätzen (z. B. h0 bis h12 bzw. h13 bis h15) des Haltespeichers H gespeicherten Speicherplatzadressen der beiden Vollspeicher U und V entsprechen, eine auf einen abgehenden Zeitkanal in seiner Zeitlage (z. B. Y10' bei Zuordnung zu X4 bzw. Y5'' bei Zuordnung zu X14) auszusendende Teilinformation mit Hilfe der im Haltespeicher H gespeicherten Vollspeicher-Speicherplatzadresse jeweils aus demjenigen Vollspeicher lesbar ist, der z. Zt. nicht im Schreibbetrieb ist, wohingegen bei einer vermittlungstechnischen Zuordnung von abgehenden Zeitkanälen des ersten — bzw. zweiten — Teilrahmens (z. B. Y7' bis Y3'' bzw. Y4'' bis Y6'') zu ankommenden Zeitkanälen des zweiten — bzw. ersten — Teilrahmens (z. B. X13 bis X15 bzw. X0 bis X12) eine auf einen abgehenden Zeitkanal in seiner Zeitlage (z. B. Y4'' bei Zuordnung zu X11 bzw. Y9' bei Zuordnung zu X15) auszusendende Teilinformation jeweils aus demjenigen Vollspeicher (z. B. U) lesbar ist, der z. Zt. im Schreibbetrieb ist. Durch diese Maßnahmen wird sichergestellt, daß mehrere innerhalb eines ankommenden Pulsrahmens in bestimmter Reihenfolge eintreffende und mit dieser Reihenfolge zu einer Mehrkanalverbindung gehörende Teilinformation immer auch wieder in dieser Reihenfolge, also in unveränderter Reihenfolge, über abgehende Zeitkanäle weitergegeben werden.

In der vorstehend zunächst in ganz grundsätzlichem Sinne abgefaßten Erläuterung des erfindungsgemäßen Ausführungsbeispiels und seiner Arbeitsweise sind Betriebsfälle gleichsam in einem Atemzug genannt, die nicht zugleich auftreten müssen. Bei jeder jedem Verbindungsaufbau vorausgehenden Wegesuche und Wegeauswahl werden zunächst immer abgehende Zeitkanäle des ersten Teilrahmens (Y7' bis Y3'') ankommenden Zeitkanälen des ersten Teilrahmens (X0 bis X12) zugeordnet. Des weiteren werden — je nach Freisein von abgehenden Zeitkanälen und je nach Belegung ankommender Zeitkanäle durch eine im Aufbau befindliche Mehrkanalverbindung — entweder abgehende Zeitkanäle des ersten Teilrahmens (Y7' bis Y3'') ankommenden Zeitkanälen des zweiten Teilrahmens (X13 bis X15) oder abgehende Zeitkanäle des zweiten Teilrahmens (Y4'' bis Y6'') ankommenden Zeitkanälen des ersten Teilrahmens (X0 bis X12) zugeordnet. Schließlich werden auch noch — ebenfalls je nach Freisein von abgehenden Zeitkanälen und je nach Belegung ankommender Zeitkanäle durch eine im Aufbau befindliche Mehrkanalverbindung — abgehende Zeitkanäle des zweiten Teilrahmens (Y4'' bis Y6'') ankommenden Zeitkanälen des zweiten Teilrahmens (X13 bis X15) zugeordnet.

Das obige, sehr allgemein gehaltene Verbindungsbeispiel für eine Mehrkanalverbindung soll nun ergänzt werden durch eine mehr detaillierte Erläuterung. Hierzu sei davon ausgegangen, daß abgehende Zeitkanäle mit den Zeitlagen Y10', Y4'' und Y5'' in dieser Reihenfolge ankommenden Zeitkanälen mit den Zeitlagen X4, X11 und X14 vermittlungstechnisch zugeordnet werden. Diese Zuordnung erfolgt aufgrund der Ergebnisse einer vorausgehenden Wegesuche. Als weitere Zuordnung sei jetzt hinzugenommen, daß außerdem noch dem abgehenden Zeitkanal mit der Zeitlage Y8' der ankommende Zeitkanal mit der Zeitlage X0 vermittlungstechnisch zugeordnet sei.

Bei diesem Beispiel möge nun eine mit der Zeitlage X0 eintreffende Teilinformation am Speicherplatz u3 eingeschrieben werden. Dies ist aus der Zeichnung erkennbar. Diese Teilinformation ist in der Zeitlage Y8' wieder zur Aussendung zu bringen. In der Zeitlage Y8' befindet sich der Vollspeicher U nicht im Schreibbetrieb. Folglich wird beim Einschreiben der die vermittlungstechnische Zuordnung zwischen den Zeitkanälen mit den Zeitlagen X0 und Y8' angebenden Vermittlungsdaten am Speicherplatz h1, der der Sendezeitlage Y8' bleibend zugeordnet ist, als Zusatzinformation an dem betr. Speicherplatzteil (h4m) eine 0 eingeschrieben, die bedeutet, daß in der Zeitlage Y8' die zur Aussendung zu bringende Teilinformation gemäß den im Haltespeicher H gespeicherten Vermittlungsdaten und der betreffenden Vollspeicher-Speicherplatzadresse aus dem Vollspeicher U (also nicht aus dem Vollspeicher V, der in diesem Zeitpunkt im Schreibbetrieb ist) zu lesen ist. Diese vermittlungstechnische Zuordnung zwischen den Zeitkanälen X0 und Y8' hat zur Folge, daß die jeweils zwischenzuspeichernden Teilinformationen immer für einen größeren Zeitraum als den eines Pulsrahmens in den Vollspeichern zwischengespeichert werden müssen. In diesem Zusammenhang zeigt es sich als notwendig, daß zwei Vollspeicher vorgesehen sind; denn eine in der Zeitlage X0 (bzw. X0', X0'' usw.) eintreffende Teilinformation trifft — wie aus der Zeichnung ersichtlich ist — immer etwas früher ein als zum Zeitpunkt der Wiederaussendung der in der gleichen Zeitlage eingetroffenen zwischengespeicherten Teilinformation des vorausgegangenen Pulsrahmens.

Bei dem Verbindungsbeispiel, dessen Beschreibung zuvor begonnen wurde, möge eine mit der Zeitlage X4 eintreffende Teilinformation am Speicherplatz u7 eingeschrieben werden. Dies ergibt sich wieder aus der Zeichnung. Diese Teilinformation ist gemäß der vermittlungstechnischen Zuordnung in der Zeitlage Y10' wieder zur Aussendung zu bringen. In der Zeitlage Y10' befindet sich der Vollspeicher U nicht im Schreibbetrieb. Folglich wird beim Einschreiben der die vermittlungstechnische Zuordnung zwischen den Zeitkanälen mit den Zeitlagen X4 und Y10' angebenden Vermittlungsdaten am Speicherplatz h3, der der Sendezeitlage Y10' entspricht, als Zusatzinformation ebenfalls eine 0 eingeschrieben, die bedeutet, daß in der Zeitlage Y10' die zur Aussendung zu bringende Teilinformation gemäß den im Haltespeicher gespeicherten Vermittlungsdaten unter der betreffenden Vollspeicher-Speicherplatzadresse aus dem Vollspeicher U zu lesen ist.

Vergleicht man nun die vermittlungstechnische Zuordnung der Zeitkanäle einerseits mit den Zeitlagen X0 und Y8' und andererseits mit den Zeitlagen X4 und Y10', so zeigt sich, daß diese letztere Zuordnung (X4 und Y10') eine Zwischenspeicherung der betreffenden Teilinformation für eine kürzere Dauer als die eines Pulsrahmens vorsieht, und daß im Hinblick auf diese Zuordnung eine Wiederaussendung der Teilinformation erst während eines gegenüber dem jeweiligen Empfangspulsrahmen nächstfolgenden Pulsrahmens erfolgen kann (wie oben erläutert wurde, erfolgt die Wiederaussendung einer während des Empfangspulsrahmens eingetroffenen Teilinformation immer während einer Sendezeitlage, die innerhalb der Pulsrahmengrenzen eines auf den jeweiligen Empfangspulsrahmen nächstfolgenden Pulsrahmens liegt). Denn erst innerhalb dieses nächstfolgenden Pulsrahmens liegt die betreffende Teilinformation zur entsprechenden Sendezeitlage zwischengespeichert im betreffenden Vollspeicher vor.

Insoweit zusammenfassend ist also festzustellen, daß bei einer vermittlungstechnischen Zuordnung von abgehenden Zeitkanälen mit den Zeitlagen Y7' bis Y3'' einzeln zu ankommenden Zeitkanälen mit den Zeitlagen X0 bis X12 eine zu der jeweiligen Sendezeitlage zu lesende Teilinformation jeweils aus demjenigen Vollspeicher zu lesen ist, der z. Zt. nicht im Schreibbetrieb ist. Gleiches gilt bei einer vermittlungstechnischen Zuordnung von abgehenden Zeitkanälen mit den Zeitlagen Y3'' bis Y6'' einzeln zu ankommenden Zeitkanälen mit den Zeitlagen X13 bis X15.

Darüber hinaus können aber auch abgehende Zeitkanäle mit den Zeitlagen Y7' bis Y3'' des obengenannten ersten Teilrahmens abgehender Zeitkanäle einzeln ankommenden Zeitkanälen mit den Zeitlagen X13 bis X15 des obengenannten zwieten Teilrahmens ankommender Zeitkanäle vermittlungstechnisch zugeordnet werden. So ist z. B. zuvor angegeben worden, daß der abgehende Zeitkanal mit der Zeitlage Y4'' dem ankommenden Zeitkanal mit der Zeitlage X11 vermittlungstechnich zugeordnet ist. Die betreffende Teilinformation ist — wie der Gesamtzusammenhang des beschriebenen Verbindungsbeispiels zeigt — am Speicherplatz u14 des Vollspeichers U eingeschrieben. Zur Zeitlage Y4'' befindet sich der Vollspeicher U im Schreibbetrieb. Wegen der vermittlungstechnischen Zuordnung der Zeitkanäle mit den Zeitlagen Y4'' und X11 ist es also erforderlich, daß die in der Sendezeitlage Y4'' wieder auszusendende Teilinformation aus demjenigen Vollspeicher gelesen wird, der z. Zt. im Schreibbetrieb ist. Beim Einschreiben der betreffenden Vermittlungsinformation am Speicherplatz h13 des Haltespeichers H wird deshalb als Zusatzinfromation eine 1 eingeschrieben, die beim Sendevorgang bewirkt, daß die betreffende Teilinformation aus demjenigen Vollspeicher entnommen wird, der z. Zt. im Schreibbetrieb ist. Wie bereits ausgeführt wurde, ist das Kriterium, welcher der beiden Vollspeicher jeweils im Schreibbetrieb ist und welcher nicht, durch die augenblickliche Stellung des Umschalters a gegeben.

Darüber hinaus ist gemäß obigem Verbindungsbeispiel für eine Vierkanalverbindung vorgesehen, daß die Zeitkanäle mit den Zeitlagen Y5'' und X14 einander zugeordnet sind. Die zur Empfangszeitlage X14 eintreffende Teilinformation wird am Speicherplatz v1 in den Vollspeicher V eingeschrieben. Diese Teilinformation ist zur Sendezeitlage Y5'' zur Wiederaussendung zu bringen. In diesem Zeitpunkt befindet sich der Vollspeicher V im Schreibbetrieb und der Vollspeicher U nicht im Schreibbetrieb. Folglich ist die zur Sendezeitlage Y5'' zur Aussendung zu bringende Teilinformation demjenigen Vollspeicher zu entnehmen, der zur Zeit nicht im Schreibbetrieb ist. Deshalb wird im Haltespeicher H am Speicherplatz h14 zusätzlich zur betreffenden Vermittlungsinformation als Zusatzinformation eine 0 eingeschrieben, aufgrund deren beim Wiederaussenden der Teilinformation zur Sendezeitlage Y5" die hierzu erforderliche Teilinformation aus dem Vollspeicher gelesen wird, der z. Zt. im Schreibbetrieb ist.

Wie diese Zusatzinformation gewonnen wird, wurde bereits erwähnt: Sie wird jeweils aus der betreffenden Haltespeicher-Speicherplatzadresse und der betreffenden Vollspeicher-Speicherplatzadresse abgeleitete und ebenfalls im Haltespeicher, und zwar am gleichen Haltespeicherplatz wie die betreffende Vollspeicher-Speicherplatzadresse gespeichert und zusammen mit der betreffenden Vollspeicher-Speicherplatzadresse wieder gelesen; dies geschieht zeitlich vor oder zugleich mit dem Schreiben der betreffenden Vollspeicher-Speicherplatzadresse in den Haltespeichern. Die erforderliche Verknüpfung erfolgt mit der Verknüpfungseinrichtung M.

Ebenfalls wurde bereits angedeutet, daß zur Ansteuerung jedes der Speicherplätzen in den beiden Vollspeichern U und V jeweils die gleiche Vollspeicher-Speicherplatzadresse dient; zur Ansteuerung eines Speicherplatzes in dem einen oder dem anderen der beiden Vollspeicher dient außer der betreffenden Vollspeicher-Speicherplatzadresse die gespeicherte Zusatzinformation, gemäß der die über den der Haltespeicher-Speicherplatzadresse entsprechenden abgehenden Zeitkanal auszusendende Teilinformation aus dem z. Zt. im Schreibbetrieb oder aus dem zur Zeit nicht im Schreibbetrieb sich befindenden Vollspeicher zu lesen ist. In Abweichung von dem zuvor Beschriebenen ist es auch möglich, daß die Zusatzinformationen erst nach dem Lesen der betreffenden Vollspeicher-Speicherplatzadresse aus dem Haltespeicher in der beschriebenen Weise abgeleitet wird.

Außerdem ist vorgesehen, daß über die Zeitmultiplexkoppelanordnung, die zuvor auszugsweise anhand der Zeichnung beschrieben worden ist, sowohl Mehrkanalverbindungen als auch Einkanalverbindungen durchgeschaltet werden. Bei Durchschaltung von Einkanalverbindungen wird die Zuordnung von abgehenden Zeitkanälen zu ankommenden Zeitkanälen sowie das Schreiben und Lesen von Speicherplatzadressen und von Teilinformationen in der gleichen Weise abgewickelt, wie bei Durchschaltung von Mehrkanalverbindungen. In Abweichung hiervon besteht aber auch die Möglichkeit, bei einer Durchschaltung von sowohl Mehrkanalverbindungen als auch Einkanalverbindungen eine Durchschaltung von Einkanalverbindungen anders als eine Durchschaltung von Mehrkanalverbindungen abzuwickeln. Allerdings werden auch in diesem Fall für Einkanalverbindungen die beiden Vollspeicher verwendet. Ähnlich wie die Verknüpfungsschaltmittel M für Mehrkanalverbindungen sind weitere Verknüpfungsschaltmittel (nicht im einzelnen dargestellt) vorgesehen, mit deren Hilfe für jeden der Zeitkanäle der abgehenden Zeitmultiplexleitung aus dem jeweils dem betreffenden Zeitkanal zugeordneten Haltespeicher-Speicherplatzadresse und aus der an dem betreffenden Speicherplatz im Haltespeicher zu speichernden oder gespeicherten Vollspeicher-Speicherplatzadresse ableitbar ist, in welchem der beiden Vollspeicher (U oder V) die unter der jeweiligen Vollspeicher-Speicherplatzadresse gespeicherte Teilinformation zu lesen ist. Dies ist also ähnlich wie bei Mehrkanalverbindungen. Die genannten Verknüpfungsschaltmittel können ähnlich wie die Verknüpfungsschaltmittel M ausgebildet sein. Generell ist vorgesehen, daß die Vollspeicher-Speicherplatzadressen und die Haltespeicher-Speicherplatzadressen Zeitwerten entsprechen, die die Zeitlagen der ankommenden Zeitkanäle und der abgehenden Zeitkanäle wiedergeben, und daß eine für eine zwischen einem ankommenden Zeitkanal und einem abgehenden Zeitkanal durchgeschaltete Verbindung aus einem der Vollspeicher zu lesende Teilinformation aus dem jeweils im Schreibbetrieb — bzw. nicht im Schreibbetrieb — befindlichen Vollspeicher zu lesen ist, wenn der der betreffenden Vollspeicher-Speicherplatzadresse entsprechende Zeitwert kleiner — bzw. größer — ist als der der betreffenden Haltespeicher-Speicherplatzadresse entsprechende Zeitwert. Hierzu im einzelnen:

Die Vollspeicher-Speicherplatzadressen entsprechen gemäß dem Zeitmaßstab t Zeitwerten. so gelangt z. B. eine in der Zeitlage X1 eintreffende Teilinformation zwangsläufig inden Vollspeicher U und wird hier am Speicherplatz u4 eingeschrieben. Insofern entsprechen also die Vollspeicher-Speicherplatzadressen Zeitwerten. Ebenfalls geht aber aus der Zeichnung auch hervor, daß die Haltespeicher-Speicherplatzadressen Zeitwerten entsprechen; denn die Haltespeicherplätze werden mit Hilfe der Ansteuerleseeinrichtung h zyklisch nacheinander durch die Steuereinrichtung Z angesteuert. Laut Zeichnung geschieht dies zu den Zeitlagen Y7' bis Y6".

Im Sinne einer Vereinfachung der technischen Zusammenhänge sei an dieser Stelle in Abweichung von dem bisher Beschriebenen eingeschoben, daß der Lesezyklus des Haltespeichers H mit der Zeitlage Y4' beginnend und mit der Zeitlage Y3" beendet sei. In einem solchen Falle ist also der Schreibpulsrahmen der Vollspeicher U bzw. V (im Wechsel) zeitlich deckungsgleich mit dem Lesepulsrahmen des Haltespeichers H. Die zuvor genannten Zeitwerte geben nun jeweils den Abstand einer Zeitlage innerhalb eines Pulsrahmens von der Pulsrahmengrenze am Anfang des betreffenden Pulsrahmens an. Unter dieser Voraussetzung besteht nun die Regel, daß eine für eine zwischen einem ankommenden Zeitkanal und einem abgehenden Zeitkanal durchgeschaltete Verbindung aus einem der Vollspeicher zu lesende Teilinformation aus dem jeweils im Schreibbetrieb befindichen Vollspeicher zu lesen ist, wenn der der beteffenden Vollspeicher-Speicherplatzadresse entsprechende Zeitwert kleiner ist als der der betreffenden Haltespeicher-Speicherplatzadresse entsprechende Zeitwert der Vermittlungsdaten für eine durchgeschaltete Einkanalverbindung. Ferner ist eine für eine zwischen einem ankommenden Zeitkanal und einem abgehenden Zeitkanal durchgeschaltete Verbindung aus einem der Vollspeicher zu lesende Teilinformation aus dem jeweils nicht im Schreibbetrieb befindlichen Vollspeicher zu lesen, wenn der der betreffenden Vollspeicher-Speicherplatzadresse entsprechende Zeitwert größer ist als der der betreffenden Haltespeicher-Speicherplatzadresse entsprechende Zeitwert.

Anschließend kehrt die Beschreibung wieder zurück zu den weiter oben beschriebenen und gemäß der Zeichnung gegebenen zeitlichen Relationen zwischen Empfangspulsrahmen, Sendepulsrahmen, Schreibpulsrahmen und Lesepulsrahmen. Danach sind u. a. die Pulsrahmengrenzen y1, y2, y3 usw. der Pulsrahmen der abgehenden Zeitkanäle gegenüber dem Beginn und dem Ende der Schreibzyklen der Vollspeicher, z. B. zwischen den Zeitlagen X12 und X13, zeitlich nicht deckungsgleich, sondern in einem Verzug um ein ganzzahliges Mehrfaches der Dauer eines einem Zeitkanal entsprechenden Zeitschlitzes. Dieser Verzug beträgt 12 Zeitschlitze. Das zuvor genannte Mehrfache ist also im vorliegenden Falle ein Zwölffaches. Die Pulsrahmengrenze y2 liegt also im Zeitvergleich zwischen den Schreibzeitlagen der Vollspeicherplätze u12 und u13. Dadurch fallen die innerhalb jeweils eines Pulsrahmens, z. B. y2/y3, liegenden Zeitlagen der abgehenden Zeitkanäle teilweise innerhalb des Schreibzyklusses des einen Vollspeichers U und teilweise innerhalb des Schreibzyklusses des anderen Vollspeichers V.

Wie nun aus der Zeichnung des weiteren hervorgeht, beinhalten die Speicherplatzadressen der Vollspeicher und die Zeitlagen der Zeitkanäle der abgehenden Zeitmultiplexleitung gemäß den sukzessive aufeinanderfolgenden Schreibvorgängen und Lesevorgängen innerhalb jedes der Schreibzyklen und jedes der abgehenden Pulsrahmen fortlaufende Zahlenwerte. Von den jeweils innerhalb eines Sendepulsrahmens liegenden Zeitlagen stellen diejenigen, die zugleich innerhalb des Schreibzyklusses des einen Vollspeichers, z. B. U, liegen, einen ersten Teil der Zeitlagen der abgehenden Zeitmultiplexleitung dar. Die innerhalb des Schreibzyklusses des anderen Vollspeichers, z. B. V, liegenden Zeitlagen desselben Sendepulsrahmens stellen einen zweiten Teil der Zeitlagen der Zeitkanäle der abgehenden Zeitmultiplexleitung dar. Es ist nun vorgesehen, daß eine für eine zwischen einem ankommenden Zeitkanal und einem abgehenden Zeitkanal durchgeschaltete Einkanalverbindung aus einem der Vollspeicher zu lesende Teilinformation aus dem jeweils im Schreibbetrieb befindlichen Vollspeicher zu lesen ist, wenn bei den abgehenden Zeitkanälen des ersten Teiles (Y0' bis Y3', z. B. Y2') der der Vollspeicher-Speicherplatzadresse (z. B. U14) entsprechende Zeitwert (z. B. 14) — bzw. bei den abgehenden Zeitkanälen (Y4' bis Y15') des zweiten Teiles (z. B. Y7') der der Vollspeicher-Speicherplatzadresse (z. B. v2) entsprechende Zeitwert (z. B. 2) —, vermindert um das dem Verzug entsprechende Mehrfache (im vorliegenden Falle 12), gleich oder kleiner ist als der der Zeitlage (z. B. Y2' bzw. Y7') des betreffenden abgehenden Zeitkanals entsprechende Zeitwert (2 bzw. 7). Anderenfalls ist die betreffende Teilinformation aus dem jeweils nicht im Schreibbetrieb befindlichen Vollspeicher zu lesen, also wenn die zuvor angegebenen Bedingungen nicht erfüllt sind.

Bei dem weiter oben erläuterten Verbindungsbeispiel für eine Mehrkanalverbindung (Vierkanalverbindung) wurde davon ausgegangen, daß die abgehenden Zeitkanäle mit den Zeitlagen Y8', Y10', Y4'' und Y5'' vermittlungstechnisch den ankommenden Zeitkanälen mit den Zeitlagen X0, X4, X11 und X14 zugeordnet sind. Dabei dienen der Zwischenspeicherung der über diese ankommenden Zeitkanäle sukzessive und in vorstehend angegebener Reihenfolge eintreffenden Teilinformationen im kontinuierlichen Wechsel die Speicherplätze u3 bzw. v3, u7 bzw. v14 und v1 bzw. u1 in dieser Reihenfolge. Im Zusammenhang mit den über die ankommenden Zeitkanäle mit den Zeitlagen X0, X4 und X15 eintreffenden und über die abgehenden Zeitkanäle mit den Zeitlagen Y8', Y10' und Y5'' weiterzugebenden Teilinformationen wird — wie weiter oben erläutert — an den diesen abgehenden Zeitkanälen zugeordneten Haltespeicherplätzen h1, h3 und h14, und zwar jeweils in einem betreffenden Speicherplatzteil (entsprechend Speicherplatzteil 4hm beim Speicherplatz h4) jeweils als Zusatzinformation eine 0 gespeichert, die beim Auslesen jeder dieser Teilinformationen bewirkt, daß dieses Auslesen jeweils aus demjenigen der beiden Vollspeicher U oder V erfolgt, der z. Zt. nicht im Schreibbetrieb ist, was wiederum aus der augenblicklich gegebenen Stellung des Umschalters a (bzw. der diesen Umschalter steuernden Einrichtung, z. B. Relais oder entsprechende elektronisch arbeitende Schalteinrichtung) hervorgeht. Im Gegensatz hierzu wird im Zusammenhang mit der über den ankommenden Zeitkanal mit der Zeitlage X11 eintreffenden und über den abgehenden Zeitkanal mit der Zeitlage Y4'' weiterzugebenden Teilinformation an dem diesem abgehenden Zeitkanal Y4'' zugeordneten Haltespeicherplatz h13, und zwar wiederum in einem ihm angehörenden Speicherplatzteil, jeweils als Zusatzinformation eine 1 gespeichert, die beim Auslesen dieser Teilinformation bewirkt, daß dieses Auslesen jeweils aus demjenigen der beiden Vollspeicher U oder V erfolgt, der z. Zt. im Schreibbetrieb ist.

Das obige Verbindungsbeispiel sei nun in der Weise abgewandelt, daß ankommenden Zeitkanälen mit den Zeitlagen X4, X13, X14 und X15 abgehende Zeitkanäle mit den Zeitlagen Y10', Y15', Y2'' und Y5'' vermittlungstechnisch zugeordnet sind. In diesem Falle dienen der Zwischenspeicherung der über diese ankommenden Zeitkanäle sukzessive und in vorstehend angegebener Reihenfolge eintreffenden Teilinformationen im kontinuierlichen Wechsel die Speicherplätze u7 bzw. v7, v0 bzw. u0, v1 bzw. u1 und v2 bzw. u2. Im Zusammenhang mit den über die ankommenden Zeitkanäle mit den Zeitlagen X4 und X15 eintreffenden und über die abgehenden Zeitkanäle mit den Zeitlagen Y10' und Y5'' weiterzugebenden Teilinformationen wird — wie weiter oben erläutert — an den diesen abgehenden Zeitkanälen zugeodneten Haltespeicherplätzen, und zwar wiederum jeweils an dem betreffenden Speicherplatzteil, als Zusatzinformation wiederum jeweils eine 0 gespeichert, die beim Auslesen jeder dieser Teilinformationen bewirkt, daß dieses Auslesen jeweils aus demjenigen der beiden Vollspeicher erfolgt, der z. Zt. nicht im Schreibbetrieb ist. Im Zusammenhang mit den über die ankommen Zeitkanäle mit den Zeitlagen X13 und X14 eintreffenden und über die abgehenden Zeitkanäle mit den Zeitlagen Y15' und Y2'' weiterzugebenden Teilinformationen wird an den diesen abgehenden Zeitkanälen zugeordneten Haltespeicherplätzen, d. h. an dem jeweiligen Speicherplatzteil, jeweils als Zusatzinformation eine 1 gespeichert, die beim Auslesen jeder dieser Teilinformationen bewirkt, daß dieses Auslesen jeweils aus demjenigen der beiden Vollspeicher U oder V erfolgt, der z. Zt. im Schreibbetrieb ist.

Es ist also festzustellen, daß bei der Zuordnung abgehender Zeitkanäle zu ankommenden Zeitkanälen mittels Wegesuche und Wegeauswahl sowohl abgehende Zeitkanäle des ersten Teilrahmens abgehender Zeitkanäle ankommenden Zeitkanälen des ersten Teilrahmens ankommender Zeitkanäle als auch abgehende Zeitkanäle des zweiten Teilrahmens ankommenden Zeitkanälen des zweiten Teilrahmens zugeordnet werden. Zusätzlich können auch abgehende Zeitkanäle des ersten Teilrahmens ankommenden Zeitkanälen des zweiten Teilrahmens, ebensogut aber auch abgehende Zeitkanäle des zweiten Teilrahmens ankommenden Zeitkanälen des ersten Teilrahmens vermittlungstechnisch zugeordnet werden, also mittels Wegesuche und Wegeauswahl. Diese zusätzliche Zuordnung abgehender Zeitkanäle zu ankommenden Zeitkanälen ist aber in der Regel alternativ. Dies bedeutet, daß in der Regel zusätzlich entweder abgehende Zeitkanäle des ersten Teilrahmens ankommenden Zeitkanälen des zweiten Teilrahmens oder abgehende Zeitkanäle des zweiten Teilrahmens ankommenden Zeitkanälen des ersten Teilrahmens vermittlungstechnisch zugeordnet werden. Bei einer Verbindung Zuordnungen dieser beiderlei Arten vorzusehen, wäre in der Regel im Zusammenhang mit den Gesichtspunkten der Wegeauswahl nicht sinnvoll.

**Patentansprüche**

1. Schaltungsanordnung für Zeitmultiplex-Fernmeldevermittlungsanlagen, insbesondere für PCM-Fernsprechvermittlungsanlagen, mit einer Zeitmultiplexkoppelanordnung, über die im Vergleich zu je nur einen einzigen Zeitkanal beanspruchenden Verbindungen (Einkanalverbindungen) dem Zweck einer Erzielung einer größeren Bandbreite und/oder einer feineren Amplitudenstufung dienende und hierzu zwei oder mehrere Zeitkanäle beanspruchende Verbindungen (Mehrkanalverbindungen) herstellbar sind, und in der bei der Vermittlung von einer Mehrkanalverbindung angehörigen Zeitkanälen einer ankommenden Zeitmultiplexleitung (K) zu entsprechenden Zeitkanälen einer abgehenden Zeitmultiplexleitung (L) mittels eines zur Aufnahme der in einem Pulsrahmen maximal übertragbaren Teilinformationen geeigneten Vollspeichers (U) die ursprüngliche zeitliche Reihenfolge der pro Pulsrahmen über die Zeitkanäle eintreffenden Teilinformationen bei deren Aussendung beibehalten wird, und in der der Schreibbetrieb, der einer Aufnahme der eintreffenden Teilinformationen einzeln pro ankommenden Zeitkanal an Speicherplätzen des Vollspeichers (U) dient, zyklisch und der Lesebetrieb, der einer Weitergabe dieser Teilinformationen einzeln über die abgehenden Zeitkanäle dient, gemäß Vermittlungsdaten duchgeführt wird, die die Zuordnung der abgehenden Zeitkanäle zu den ankommenden Zeitkanälen angeben und pro abgehenden Zeitkanal auf Speicherplätzen eines Haltespeichers (H) in Form von Speicherplatzadressen des Vollspeichers gespeichert sind, und in der außer dem genannten — ersten — Vollspeicher (U) noch ein zweiter Vollspeicher (V) vorgesehen ist, wobei der eine Vollspeicher (z. B. U) während der Dauer eines ersten Schreibpulsrahmens und der andere Vollspeicher (z. B. V) während der Dauer eines nächstfolgenden zweiten Schreibpulsrahmens im Schreibbetrieb ist und in der die in den Speicherplätzen beider Vollspeicher (U, V) gespeicherten Teilinformationen innerhalb des nächstfolgenden Pulsrahmens der ankommenden Zeitmultiplexleitung (L) ausgelesen werden, um über abgehende Zeitkanäle zur Aussendung gebracht zu werden, dadurch gekennzeichnet, daß die Pulsrahmen der Zeitkanäle einer ankommenden Zeitmultiplexleitung (K) gegenüber den Schreibpulsrahmen (x1-x2-x3) in nacheilendem Sinne um ein ganzzahliges Vielfaches (z. B. drei) der Dauer eines einem Zeitkanal entsprechenden Zeitschlitzes zeitlich versetzt sind, wodurch gemäß dieser Versetzung die innerhalb eines Pulsrahmens eintreffenden Teilinformationen teils in einer zweiten Reihe von letzten Speicherplätzen (u3—u15) des einen Vollspeichers (U) und teils in einer ersten Reihe von ersten Speicherplätzen (v0, V1, V2) des anderen Vollspeichers (V) gespeichert werden und daß Verknüpfungsschaltmittel (M) vorgesehen sind, mit deren Hilfe aus der im Haltespeicher für jeden der abgehenden Zeitkanäle unter den ihnen entsprechenden Haltespeicher-Speicherplatzadressen zu speichernden oder gespeicherten Vollspeicher-Speicherplatzadresse in Zusammenhang mit der betreffenden Haltespeicher-Speicherplatzadresse ableitbar ist, in welchem der beiden Vollspeicher (U, V) die unter dieser Vollspeicher-Speicherplatzadresse gespeicherte Teilinformation zu lesen ist (b).

2. Schaltungsanordnung nach Anspruch 1, dadurch gekennzeichnet, ebenso wie jeder der Pulsrahmen (z. B. x1/x2) der ankommenden Zeitkanäle (z. B. mit den Zeitlagen X0 bis X15) durch die ihm gegenüber vorgegebene Versetzung der Schreibpulsrahmen (z. B. voreilend um drei Zeitlagen) in einen hinsichtlich Zeitlagen ersten Teilrahmen (z. B. X0 bis X12) von Zeitkanälen, denen die zweite Reihe von Speicherplätzen (z. B. u3 bis u15) in dem einen Vollspeicher (z. B. U) zugeordnet ist, und in einem hinsichtlich Zeitlagen folgenden zweiten Teilrahmen (z. B. X13 bis X15) von Zeitkanälen, denen die erste Reihe von Speicherplätzen (z. B. v0 bis v2) in dem anderen Vollspeicher (z. B. V) zugeordnet ist, unterteilt ist, auch die abgehenden Zeitkanäle, die mit ihren Zeitlagen (z. B. X7' bis Y6") innerhalb eines jeweils nächstfolgenden Pulsrahmens der ankommenden Zeitkanäle liegen, in entsprechender Weise in einen hinsichtlich Zeitlagen ersten Teilrahmen (z. B. Y7' bis Y3") und einen hinsichtlich Zeitlagen folgenden zweiten Teilrahmen (Y4" bis Y6") zusammengefaßt sind. Ferner ist vorgesehen, daß bei der vermittlungstechnischen Zuordnung von abgehenden Zeitkanälen des ersten — bzw. zweiten — Teilrahmens (z. B. Y7' bis Y3" bzw. Y4" bis Y6"), deren einzelnen Zeitlagen die Speicherplatzadressen der Speicherplätze (z. B. h0 bis h12 bzw. h13 bis h15) des Haltespeichers H entsprechen, zu ankommenden Zeitkanälen des ersten — bzw. zweiten — Teilrahmens (z. B. X0 bis X12 bzw. X13 bis X15), deren einzelnen Zeitlagen die in den Speicherplätzen (z. B. h0 bis h12 bzw. h13 bis h15) des Haltespeichers H gespeicherten Speicherplatzadressen der beiden Vollspeicher U und V entsprechen, eine auf einen abgehenden Zeitkanal in seiner Zeitlage (z. B. Y10' bei Zuordnung zu X4 bzw. X5" bei Zuordnung zu X14) auszusendende Teilinformationen mit Hilfe der im Haltespeicher H gespeicherten Vollspeicher-Speicherplatzadresse jeweils aus demjenigen Vollspeicher lesbar ist, der z.- Zt. nicht im Schreibbetrieb ist, wohingegen bei einer vermittlungstechnischen Zuordnung von abgehenden Zeitkanälen des ersten — bzw. zweiten — Teilrahmens (z. B. Y7' bis Y3" bzw. Y4" bis Y6") zu ankommenden Zeitkanälen des zweiten — bzw. ersten — Teilrahmens (z. B. X13 bis X15 bzw. X0 bis X12) eine auf einen abgehenden Zeitkanal in seiner Zeitlage (z. B. Y4" bei Zuordnung zu X11 bzw. Y9' bei Zuordnung zu X15) auszusendende Teilinformation jeweils aus demjenigen Vollspeicher (z. B. U) lesbar ist, der z. Zt. im Schreibbetrieb ist.

3. Schaltungsanordnung nach Anspruch 2, dadurch gekennzeichnet, daß zur Ansteuerung jedes der Speicherplätze (u0—u15 und v0—v15) in den beiden Vollspeichern (U, V) jeweils die gleiche Vollspeicher-Speicherplatzadresse dient, und daß zur Ansteuerung eines Speicherplatzes in dem einen oder dem anderen der beiden Vollspeicher (U oder V) aus der jeweiligen Haltespeicher-Speicherplatzadresse und der auf dem betreffenden Haltespeicherplatz (z. B. h2) gespeicherten Vollspeicher-Speicherplatzadresse mittels der Verknüpfungsschaltmittel (M) eine Zusatzinformation abgeleitet wird, gemäß der die über den der Haltespeicher-Speicherplatzadresse entsprechenden abgehenden Zeitkanal auszusendende Teilinformation aus dem zur Zeit im Schreibbetrieb oder aus dem zur Zeit nicht im Schreibbetrieb sich befindenden Vollspeicher (U oder V) zu lesen ist.

4. Schaltungsanordnung nach Anspruch 3, dadurch gekennzeichnet, daß die Zusatzinformation nach dem Lesen der betreffenden Vollspeicher-Speicherplatzadresse aus dem Haltespeicher (H) abgeleitet wird.

5. Schaltungsanordnung nach Anspruch 3, dadurch gekennzeichnet, daß die Zusatzinformation vor oder mit dem Schreiben der betreffenden Vollspeicher-Speicherplatzadresse in den Haltespeicher (H) aus Haltespeicher-Speicherplatzadresse und Vollspeicher-Speicherplatzadresse abgeleitet und ebenfalls im Haltespeicher (H), insbesondere am gleichen Haltespeicherplatz wie die betreffende Vollspeicher-Speicherplatzadresse, gespeichert und zusammen mit der betreffenden Vollspeicher-Speicherplatzadresse gelesen wird.

6. Schaltungsanordnung für Fernmeldevermittlungsanlagen, insbesondere Fernsprechvermittlungsanlagen, mit einer Zeitmultiplexkoppelanordnung, über die sowohl Mehrkanalverbindungen als auch Einkanalverbindungen durchgeschaltet werden nach Anspruch 1, dadurch gekennzeichnet, daß bei Durchschaltung von Einkanalverbindungen die Zuordnung von abgehenden Zeitkanälen zu ankommenden Zeitkanälen sowie das Schreiben und Lesen von Speicherplatzadressen und von Teilinformationen in der gleichen Weise abgewickelt wird, wie bei Durchschaltung von Mehrkanalverbindungen.

7. Schaltungsanordnung für Fernmeldevermittlungsanlagen, insbesondere Fernsprechvermittlungsanlagen, mit einer Zeitmultiplexkoppelanordnung, über die sowohl Mehrkanalverbindungen als auch Einkanalverbindungen durchgeschaltet werden nach Anspruch 1, dadurch gekennzeichnet, daß auch für Einkanalverbindungen die beiden Vollspeicher (U, V) verwendet werden, und daß Verknüpfungsschaltmittel (M) vorgesehen sind, mit deren Hilfe für jeden der Zeitkanäle der abgehenden PCM-Zeitmultiplexleitung (L) aus der jeweils betreffenden Zeitkanal zugeordneten Haltespeicher-Speicherplatzadresse und aus der an dem betreffenden Speicherplatz im Haltespeicher (H) zu speichernden Vollspeicher-Speicherplatzadresse ableitbar ist, in welchem der beiden Vollspeicher (U oder V) die unter der jeweiligen Vollspeicher-Speicherplatzadresse gespeicherte Teilinformation zu lesen ist.

8. Schaltungsanordnung nach Anspruch 7, dadurch gekennzeichnet, daß die Vollspeicher-Speicherplatzadressen und die Haltespeicher-Speicherplatzadressen Zeitwerten entsprechen, die die Zeitlagen der ankommenden Zeitkanäle (über K) und der abgehenden Zeitkanäle (über L) wiedergeben, und daß eine für eine zwischen einem ankommenden Zeitkanal und einem abgehenden Zeitkanal durchgeschaltete Verbindung aus einem der Vollspeicher (U oder V) zu lesende Teilinformation aus dem jeweils im Schreibbetrieb — bzw. nicht im Schreibbetrieb — befindlichen Vollspeicher (U oder V) zu lesen ist, wenn der der betreffenden Vollspeicher-Speicherplatzadresse entsprechende Zeitwert kleiner — bzw. größer — ist als der der betreffenden Haltespeicher-Speicherplatzadresse entsprechende Zeitwert.

9. Schaltungsanordnung für Fernmeldevermittlungsanlagen, insbesondere Fernsprechvermittlungsanlagen, mit einer Zeitmultiplexkoppelanordnung, in welcher die Pulsrahmengrenzen (y1, y2, y3) der Pulsrahmen der abgehenden Zeitkanäle gegenüber dem Beginn und dem Ende der Schreibzyklen der Vollspeicher (U, V) zeitlich nicht deckungsgleich sind, sondern in einem Verzug um ein ganzzahliges (z. B. zwölf) Mehrfaches der Dauer eines einem Zeitkanal entsprechenden Zeitschlitzes, wodurch die innerhalb jeweils eines Pulsrahmens (z. B. y2/y3) liegenden Zeitlagen eines ersten Teiles — bzw. zweiten Teiles — der abgehenden Zeitkanäle zugleich innerhalb des Schreibzyklusses des einen Vollspeichers (U) — bzw. des anderen Vollspeichers (V) — liegen, nach Anspruch 8, dadurch gekennzeichnet, daß die Speicherplatzadressen der Vollspeicher (U, V) und die Zeitlagen der Zeitkanäle der abgehenden Zeitmultiplexleitung (L) gemäß den sukzessive aufeinanderfolgenden Schreibvorgängen und Lesevorgängen innerhalb jedes der Schreibzyklen und jedes der abgehenden Pulsrahmen fortlaufende Zahlenwerte darstellen, und daß eine für eine zwischen einem ankommenden Zeitkanal (über K) und einem abgehenden Zeitkanal (über L) durchgeschaltete Einkanalverbindung aus einem der Vollspeicher (U oder V) zu lesende Teilinformation aus dem jeweils im Schreibbetrieb befindlichen Vollspeicher (z. B. U) zu lesen ist, wenn bei den abgehenden Zeitkanälen des ersten Teiles (Y0' bis Y3', z. B. Y2') der der Vollspeicher-Speicherplatzadresse (z. B. U14) entsprechende Zeitwert (z. B. 14) — bzw. bei den abgehenden Zeitkanälen (Y4' bis Y15') des zweiten Teiles (z. B. Y7') der der Vollspeicher-Speicherplatzadresse (z. B. v2) entsprechende Zeitwert (z. B. 2) —, vermindert um das dem Verzug entsprechende Mehrfache (im vorliegenden Falle 12), gleich oder kleiner ist als der der Zeitlage (z. B. Y2' bzw. Y7') des betreffenden abgehenden Zeitkanals entsprechende Zeitwert (2 bzw. 7) und daß diese Teilinformation aus dem jeweils nicht im Schreibbetrieb befindliche Vollspeicher zu lesen ist, wenn diese Bedingungen nicht erfüllt sind.

**Claims**

1. A circuit arrangement for t. d. m. telecommunications exchanges, in particular PCM telephone exchanges with a t. d. m. switching network via which, in comparison to connections which require only one single time channel (single-channel connections), it is possible to establish connections which serve to provide a larger bandwidth and/or a finer amplitude grading and for this purpose require two or more time channels (multi-channel connections), and in which, in the switching of time channels, assigned to a multi-channel connection, of an incoming t. d. m. line (K) to corresponding time channels of an outgoing t. d. m. line (L), by means of a full store (U) suitable to accommodate the maximum subsidiary information which can be transmitted in a pulse frame, the original time sequence of the items of subsidiary information which arrive via the time channels in each pulse frame is retained when they are transmitted, and in which the write-in operation which serves to record the incoming items of subsidiary information individually in respect of each incoming time channel in storage positions of the full store (U) is carried out cyclically, and the read-out operation which serves to forward these items of subsidiary information individually via the outgoing time channels is carried out in accordance with items of switching data which indicate the assignment of the outgoing time channels to the incoming time channels and are stored in respect of each outgoing time channel in storage positions of a hold store (H) in the form of storage position adresses of the full store, and in which, in addition to the aforementioned first full store (U) a second full store (V) is provided, where the first full store (e. g. U) engages in write-in operation for the duration of a first write-in pulse frame and the other full store (e. g. V) engages in write-in operation for the duration of a following second write-in pulse frame, and in which the items of subsidiary information stored in the storage positions of the two full stores (U, V) are read out within the next pulse frame of the incoming t. d. m. line (L) in order to be transmitted via outgoing time channels, characterised in that the pulse frames of the time channels of an incoming t. d. m. line (K) are time-staggered relative to the write-in pulse frames (X-1-X2-X3) in a lagging sense by a whole-numbered multiple (e. g. 3) of the duration of a time slot corresponding to a time channel, as a result of which, in accordance with this time stagger, the items of subsidiary information which arrive within a pulse frame are stored partially in a second series of last storage positions (u3—u15) of the first full store (U) and partially in a first series of first storage positions (V0, V1, V2) of the other full store (E), and that logic-linking switching means (M) are provided with the assistance of which, from the full store — storage position address which is to be stored or is stored in the hold store for each of the outgoing time channels under the corresponding hold store — storage position addresses, in association with the relevent hold store — storage position address it is possible to establish in which of the two full stores (U, V) the item of subsidiary information stored under this full store — storage position address is to be read out (b).

2. A circuit arrangement as claimed in claim 1, characterised in that in the same way that each of the pulse frames (e. g. x1/x2) of the incoming time channels (e. g. with the time slots X0 to X15) is sub-divided as a result of the relative stagger fo the write-in pulse frames (e. g. leading by three time slots), into a subframe (e. g. X0 to X12) — which is first in terms of time slots — of time channels which are assigned the second series of storage positions (e. g. u3 to u15) in the first full store (e. g. U) and into a second sub-frame (e. g. X13 to X15) — which follows in terms of time slots — of time channels which are assigned the first series of storage positions (e. g. v0 to v2) in the other full store (e. g. V), similarly the outgoing time channels whose time slots (e. g. Y7′ to Y6″) lie within a following pulse frame of the incoming time channels are combined accordingly in a sub-frame (e. g. Y7′ to Y3″) which is first in respect of time slots and in a sub-frame (Y4″ to Y6″) which is second and thus follows in terms of time slots.It is also provided that in the assignment, in terms of switching, of outgoing time channels of the first — and second — sub-frames (e. g. Y7′ to Y3′ and of Y4″ to Y6″) whose individual time slots correspond to the storage position addresses of the storage positions (e. g. h0 to h12 and h13 to h15) of the hold store h to incoming time channels of the first — and second-sub-frames (e. g. X0 to X12 and X13 to X15) whose individual time slots correspond to the storage position addresses, stored in the storage positions (e. g. h0 to h12 and h13 to h15) of the hold store H, of the two full stores U and V, an item of subsidiary information which is to be transmitted on an outgoing time channel in its time slot (e. g. Y10′ in the case of assignment to X4 and Y5″ in the case of assignment to X14) can be read out with the assistance of the full store-storage position address, stored in the hold store H, from that full store which is currently not engaded in write-in operation, whereas in the event of the assignment, in terms of switching, of outgoing time channels of the first- and second-sub-frames (e. g. Y7′ to Y3″ and Y4″ to Y6″) to incoming time channels of the secon- and first-sub-frames (e. g. X13 to X15 and X0 to X12), an item of subsidiary information which is to be transmitted on an outgoing time channel in its time slot (e. g. Y4″ in the case of assigment to X11 and Y9′ in the case of assignment to X15) can in each case be read out from that full store (e. g. U) which is currently engaged in write-in operation.

3. A circuit arrangement as claimed in claim 2, characterised in that the same full store- storage position address serves to drive each of the storage positions (u0—u15 and v0—v15) in the two full stores (U, V), and that in order to drive a storage position in the one or other of the two full stores (U or V), from the particular hold store-storage position address and the full store-storage position address stored in the hold store position in question (e. g. h2), by means of the logic-linking switching means (M) an item of additional information is obtained in accordance with which the item of subsidiary information which is to be transmitted across the outgoing time channel corresponding to the hold store-storage position address is to be read out from the full store which is currently engaged in write-in operation or the full store which is not currently engaged in write-in operation (U or V).

4. A circuit arrangement as claimed in claim 3, characterised in that the additional information is obtained following the read-out of the particular full store-storage position address from the hold store (H).

5. A circuit arrangement as claimed in claim 3, characterised in that the additional information is derived from the hold store-storage position address and the full store-storage position address prior to or simultaneously to the write-in of the particular full store-storage position address in the hold store (H), and is likewise stored in the hold store (H), in particular in the same hold storage position as the relevent full store-storage position address, and is read out together with the relevant full store-storage position address.

6. A circuit arrangement for telecommunications exchanges, in particular telephone exchanges, with a t. d. m. coupling arrangement via which both multi-channel connections and single-channel connections are switched through in accordance with claim 1, characterised in that for the switch-through of single-channel connections the assignment of outgoing time channels to incoming time channels and the write-in and read-out of storage position addresses and subsidiary items of information are handled in the same way as in the case of the switch-through of multi-channel connections.

7. A circuit arrangement for telecommunications exchanges, in particular telephone exchanges, with a t. d. m. coupling arrangement via which both multi-channel connections and single-channel connections are switched through as claimed in claim 1, characterised in that the two full stores (U, V) are also used for single-channel connections and that logic-linking switching means (M) are provided with the assistance of which, for each of the time channels of the outgoing PCM t. d. m. line (L) from the hold store-storage position address assigned to the relevant time channel and from the full store-storage position address which is to be stored or is stored in the relevant storage position in the hold store (H) it can be ascertained in which of the two stores (U or V) the item of subsidiary information stored under the relevant full store-storage position address is to be read out.

8. A circuit arrangement as claimed in claim 7, characterised in that the full store-storage position adresses and the hold store-storage position addresses correspond to time values which reproduce the time slots of the incoming time channels (via K) and of the outgoing time channels (via L), and that an item of subsidiary information which is to be read out from one of the full stores (U or V) for a connection switched through between an incoming time channel and an outgoing time channel is to be read out from the full store which is engaged in write-in operation or the full store which is not engaged in write-in operation (U or V) when the time value which corresponds to the relevant full store-storage position address is smaller than or is greater than respectively the time value corresponding to the relevant hold store-storage position address.

9. A circuit arrangement for telecommunications exchanges, in particular telephone exchanges, with a t. d. m. coupling arrangement in which the pulse frame boundaries (y1, y2, y3) of the pulse frames of the outgoing time channels do not coincide in time in relation to the beginning and the end of the write-in cycles of the full stores (U, V) but are staggered by a wholenumbered (e. g. 12) multiple of the duration of a time slot corresponding to a time channel, as a result of which, the time slots, located within a pulse frame (e. g. y2, y3), of a first section or second section of the outgoing time channels simultaneously occur within the write-in cycle of the first full store (U) or the other full store (V) as claimed in claim 8, characterised in that the storage position adresses of the full stores (U, V) and the time slots of the time channels of the outgoing t. d. m. line (L) represent consecutive numerical values in accordance with the successive write-in operations and read-out operations within each of the write-in cycles and each of the outgoing pulse frames, and that an item of subsidiary information to be read out from one of the full stores (U or V) for a single channel connection switched through between an incoming time channel (via K) and an outgoing time channel (via L) is to be read out from the full store (e. g. U) which is engaged in write-in operation when, in the case of the outgoing time channels of the first section (y0 to y3', (e. g. y2') the time value (e. g. 14) corresponding to the full store-storage position address (e. g. U14) —or in the case of the outgoing time channels (Y4' to Y15') of the second section (e. g. Y7') the time value (e. g. 2) corresponding to the full store-storage position address (e. g. v2) — reduced by the multiple corresponding to the time stagger (in the present example 12) — is equal to or smaller than the time value (2 or 7 respectively) corresponding to the time slot (e. g. Y2' and Y7') of the relevant outgoing time channel, and that this item of subsidiary information is to be read out from the full store which is not engaged in write-in operation when these conditions are not fulfilled.

## Revendications

1. Montage par des installations de télécommunications à multiplexage temporel, notamment pour des installations de téléphonie MIC, comportant un dispositif de couplage à multiplexage temporel qui permet d'établir des liaisons (liaisons à canaux multiples) qui, comparativement à des liaisons monocanal) requérant seulement un seul canal temporel, servent à obtenir une largeur de bande plus importante et/ou un échelonnement plus fin des amplitudes et requièrent à cet effet deux ou plusieurs canaaux temporels, et dans lequel lors de la commutation depuis des canaux temporels, appartenant à une liaison à canaux multiples, d'une ligne de multiplexage temporelle d'arrivée vers des canaux temporels correspondants d'une ligne de multiplexage temporel de départ (M) au moyen d'une mémoire complète (U) convenant pour recevoir les informations partielles pouvant être transmises au maximum dans une trame d'impulsions, la succession initiale dans le temps des informations partielles apparaissant pour chaque trame d'impulsions dans les canaux temporels est conservée lors de l'émission de ces informations, et dans lequel le foncitionnement à l'enregistrement, qui sert à réaliser une réception des informations partielles introduites dans des cases de la mémoire complète (U), et ce individuellement pour chaque canal temporel d'arrivée, est exécutée cycliquement et le fonctionnement de lecture qui sert à la production de ces informations partielles individuellement par l'intermédiaire des canaux temporels de départ, est exécuté conformément à des données de commutation, qui indiquent l'association des canaux temporels de départ aux canaux temporels d'arrivée et sont mémorisés, pour chaque canal temporel de départ, dans des cases d'une mémoire de maintien (H) sous la forme d'adresses de cases de la mémoire complète, et dans lequel il est prévu, en plus de la — première — mémoire complète (U) indiquée, une seconde mémoire complète (V), une mémoire complète (par exemple U) fonctionnant à l'enregistrement pendant la durée d'une première trame d'impulsions d'enregistrement et l'autre mémoire complète (par exemple V) fonctionnant à l'enregistrement pendant la durée de la seconde trame d'impulsions d'enregistrement, immédiatement suivante, et dans lequel les informations partielles, qui sont mémorisées dans les cases des deux mémoires complètes (U, V), sont lues à l'intérieur de la trame d'impulsions immédiatement suivante de la ligne de multiplexage temporel d'arrivée (L) afin d'être émises par l'intermédiaire de canaux temporels de départ, caractérisé par le fait que les trames d'impulsions des canaux temporels d'une ligne de multiplexage temporel d'arrivée (K) sont décalées dans le temps, par rapport aux trames d'impulsions d'enregistrement (x1-x2-x3) en avant d'un multiple entier (par exemple trois) de la durée d'une plage temporel correspondant à un canal temporel, ce qui a pour effet que conformément à ce décalage, les informations partielles arrivant à l'intérieur d'une trame d'impulsions sont mémorisées en partie dans une seconde rangée de dernières cases (u3—u15) d'une mémoire complète (U) et en partie dans une première rangée de premières cases (V0—V1 V2) de l'autre mémoire complète (V), et qu'il est prévu des moyens (M) de commutation de combinaison, à l'aide desquels, à partir de l'adresse de la case de mémoire complète devant être mémorisée ou qui est mémorisée dans la mémoire de maintien pour chacun des canaux temporels de départ aux adresses des cases de la mémoire de maintien, qui leur correspondent, et en association avec l'adresse considédée de la mémoire de maintien on peut savoir laquelle des deux mémoires compètes (U, V) l'information partielle mémorisée à cette adresse de la case de la mémoire complète doit être lue (b).

2. Montage suivant la relvendication 1, caractérisé par le fait que de même que chacune des trames d'impulsions (par exemple x1, x2) des canaux temporels d'arrivée (par exemple comportant des canaux temporels X0 à X15) est subdivisée par suite de décalage, qui est prédéterminé par rapport à cette trame, des trames d'impulsions d'enregistrement (correspondant par exemple à une avance de trois canaux temporels), en une première — du point de vue des canaux temporels — trame partielle (par exemple X0 à X12) de canaux temporels, auxquels est associée la seconde rangée de cases de mémoire (par exemple u3 à u4) dans une mémoire complète (par exemple U), et en une seconde trame temporelle (par exemple X13 à X15), qui intervient ensuite du point de vue des canaux temporels, de canaux temporels auxquels est associée la première rangée de cases de mémoire (par exemple v0 à v2) dans l'autre mémoire complète (par exemple V), également les canaux temporels de départ, qui sont situés par leurs créneaux temporels (par exemple Y7' à Y6'') à l'intérieur d'une trame d'impulsions immédiatement suivante des canaux temporels d'arrivée, sont réunis d'une manière correspondante dans une prmière — du point de vue des créneaux temporels — trame partielle (par exemple Y7' à Y3'') et en une seconde trame partielle (Y4'' à Y6''), intervenant ensuite du point de vue des créneaux temporels, et qu'il est en outre prévu que, dans le cas de l'associations, du point de vue de la technique de commutation, de canaux temporels de départ de la première — ou de la seconde — trame partielle (par exemple Y7' à Y3'' ou Y4'' à Y6''), aux différents créneaux temporels de laquelle correspondent les adresses des cases (par exemple h0 à h12, h13 à 15) de la mémoire de maintien (H), à des canaux temporels d'arrivée de la première — ou de la seconde — trame partielle (par exemple X0 à X12 ou X13 à X15), aux différents créneaux temporels de laquelle correspondent les adresses des cases des deux mémoires complètes (U et V) mémorisées dans les cases (par exemple h0 à h12 et h13 à h15) de la mémoire de maintien H, une information partielle, qui doit être émise dans un canal temporel de départ dans son créneau temporel (par exemple Y10' lors de l'association à X4 ou Y5'' dans le cas de l'association à X14) peut être lue à l'aide de l'adresse de la case de la mémoire complète mémorisée dans la mémoire de maintien (H), à partir de la mémoire complète qui ne fonctionne pas actuellement selon le mode d'enregistrement, tandis que dans le cas d'une association du point de vue de la technique de commutation de canaux temporels de départ de la première — ou de la seconde — trame partielle (par exemple Y7' à Y3'' ou Y4'' à Y6'') à des canaux temporels d'arrivée de la seconde — ou de la première — trame partielle (par exemple X13 à X15 ou X0, X12), une information partielle, qui peut être émise dans un canal temporel de départ dans son créneau temporel (par exemple Y4'' dans le cas de l'association à X11 ou Y9' dans le cas de l'association à X15) peut être lue à partir de la mémoire complète (par exemple U) qui fonctionne actuellement selon le mode d'enregistrement.

3. Montage suivant la revendication 2, caractérisé par le fait que pour la commande de chacune des cases de mémoire (u0—u14 et v0—v15) dans les deux mémoires complètes (U, V), on utilise respectivement la même adresse de case de la mémoire complète, et que pour la commande d'une case de mémoire située dans l'une ou l'autre des deux mémoires complètes (U ou V), à partir de l'adresse respective de la case de la mémoire de maintien et de l'adresse de la case de la mémoire complète, mémorisée dans la case considérée de la mémoire de maintien (par exemple h2) se trouve dérivée, au moyen du circuit (M) de commutation de combinaison, une information supplémentaire selon laquelle l'information partielle, qui doit être émise par l'intermédiaire du canal temporal de départ correspondant à l'adresse de la case de mémoire de maintien, doit être lue dans la mémoire complète (U ou V) fonctionnant alors dans le mode d'enregistrement ou bien dans la mémoire complète non alors située dans le mode d'enregistrement.

4. Montage suivant la revendication 3, caractérisé par le fait que l'information supplémentaire est dérivée de la mémoire de maintien (H) après la lecture de l'adresse de la case considérée de la mémoire complète.

5. Montage selon la revendication 3, caractérisé en ce que l'information supplémentaire est tirée de l'adresse de la case de la mémoire de maintien (H) et de l'adresse de la mémoire complète avant ou lors de l'enregistrement de l'adresse de la case considérée de la mémoire complète dans la mémoire de maintien (H), et est mémorisée également dans la mémoire de maintien, notamment à la même case de mémoire de maintien que l'adresse de la case considérée de la mémoire complète, et est lue en association avec l'adresse de la case considérée de la mémoire complète.

6. Montage pour des installations de télécommunications notamment des installations de téléphonie, comportant un dispositif de couplage à multiplexage temporel, au moyen duquel aussi bien des liaisons à canaux multiples que des liaisons monocanal sont interconnectées directement, selon la revendication 1, caractérisé par le fait que dans le cas de l'interconnexion directe de liaisons monocanal, l'association de canaux temporels de départ à des canaux temporels d'arrivée ainsi que l'enregistrement et la lecture d'adresses de cases de mémoire et d'informations partielles se déroulent de la même manière que dans le cas de l'interconnexion directe de liaison à canaux multiples.

7. Montage pour des installations de télécommunication, notamment des installations de téléphonie, comportant un dispositif de couplage à multiplexage temporel, au moyen duquel aussi bien des liaisons à canaux multiples que des liaisons monocanal sont interconnectées directement, suivant la revendication 1, caractérisé par le fait qu'on utilise également les deux mémoires complètes (U V) pour des liaisons monocanal et qu'il est prévu des moyens (M) de commutation de combinaison à l'aide desquels pour chacun des canaux temporels de la ligne de multiplexage temporel MIC de départ (L), à partir de l'adresse de la case de la mémoire de maintien associée respectivement au canal temporel considéré, et à partir de l'adresse de la case de la mémoire complète devant être mémorisée ou qui est mémorisée dans la case considérée de la mémoire de maintien (H), il est possible de tirer l'information sur celle des deux mémoires complètes (U ou V) dans laquelle l'information partielle mémorisée à l'adresse de la case considérée de la mémoire complète doit être lue.

8. Montage suivant la revendication 7, caractérisé par le fait que les adresses des cases de la mémoire complète et les adresses des cases de la mémoire de maintien correspondent à des valeurs de temps qui reproduisent les créneaux temporels des canaux temporels d'arrivée (par l'intermédiaire de K) et des canaux temporels de départ (par l'intermédiaire de L), et qu'une information partielle, qui doit être leu à partir de l'une des mémoires complète (U ou V) pour une liaison interconnectée directement à un canal temporel d'arrivée et à un canal temporel de départ, doit être lue dans la mémoire complète (U ou V) fonciitionnant respectivement dans le mode d'enregistrement (et ou ne fonctionnant pas dans le mode d'enregistrement —, lorsque la valeur de temps, qui correspond à l'adresse de la case considérée de la mémoire complète, est inférieure — ou supérieure — à la valeur de temps correspondant à l'adresse de la case considérée de la mémoire de maintien.

9. Montage pour des installations de télécommunication, notamment des installations de téléphonie, comportant un dispositif de couplage à multiplexage temporel, dans lequel les limites (y1, y2, y3) des trames d'impulsions des canaux temporels de départ ne coïncident pas dans le temps avec le début et la fin des cycles d'enregistrement des mémoires complètes (U, V), mais sont dé calés d'un multiple entier (par exemple douze) de la durée d'une plage temporelle correspondant à un canal temporel, ce qui à pour effet que les créneaux temporels situés à l'intérieur d'une trame d'impulsions respective (par exemple y2, y3) d'une première partie — ou d'une seconde partie — des canaux temporels de départ sont situés simultanément à l'intérieur du cycle d'eneregistrement d'une mémoire complète (U) — ou de l'autre mémoire complète (V) — selon la revendication 8, caractérisé par le fait que les adresses des cases des mémoires complètes (U, V) et les créneaux temporels des canaux temporels de la ligne de multiplexage temporel de départ (L) représentent des valeurs chiffrées continues, conformément aux processus successifs d'enregistrement et de lecture à l'intérieur de chacun des cycles d'enregistrement et de chacunes des trames d'impulsions de départ, et qu'une information partielle, qui doit être lue dans l'une des mémoires complètes (U ou V) pour une liaison monocanal interconnesctée directement entre un canal temporel d'arrivée (par l'intermédiaire de K) et un canal temporel de départ (par l'intermédiaire de F), doit être lue à partir de la mémoire complète (par exemple B U) fonctionnant respectivement à l'enregistrement, lorsque, dans le cas des canaux temporels de départ de la première partie (Y0' à Y3', par exemple Y3'), la valeur de temps (par exemple 14) qui correspond à l'adresse (par exemple U14) de la case de la mémoire complète — ou dnas le cas des canaux temporels de départ (Y4' à Y15') de la seconde partie (par exemple Y7'), la valeur de temps (par exemple 2) correspondant à l'adresse (par exemple v2) de la case de la mémoire complète —, réduite du multiple (dans la cas présent 12) correspondant au retard, est égale ou inférieure à la valeur de temps (2 ou 7) correspondant au crénau temporel (par exemple y2' ou y7') du canal temporel de départ considéré, et que cette information partielle doit être lue à partir de la mémoire complète ne fonctionnant pas respectivement dans le mode d'enregistrement, lorsque ces conditions ne sont pas remplies.